# EUROPÄISCHE PATENTSCHRIFT

(11) **EP 4 067 633 B1**
(45) Veröffentlichungstag und Bekanntmachung des Hinweises auf die Patenterteilung: **28.08.2024**
(21) Anmeldenummer: 21165546.9
(22) Anmeldetag: 29.03.2021
(51) Int. Cl.: F01N 1/08, F01N 3/28, F01N 13/00

(54) **ABGASSCHALLDÄMPFER, ZWEITAKTMOTOR ODER VIERTAKTMOTOR MIT EINEM ABGASSCHALLDÄMPFER UND KATALYSATOR FÜR EINEN ABGASSCHALLDÄMPFER**
EXHAUST SILENCER, TWO-STROKE ENGINE OR FOUR-STROKE ENGINE WITH AN EXHAUST SILENCER AND CATALYTIC CONVERTER FOR AN EXHAUST SILENCER
SILENCIEUX DE GAZ D'ÉCHAPPEMENT, MOTEUR À DEUX TEMPS OU MOTEUR À QUATRE TEMPS POURVU DE SILENCIEUX DE GAZ D'ÉCHAPPEMENT ET CATALYSEUR POUR UN SILENCIEUX DE GAZ D'ÉCHAPPEMENT

(43) Veröffentlichungstag der Anmeldung: 05.10.2022
(73) Patentinhaber: Andreas Stihl AG & Co. KG, 71336 Waiblingen (DE)
(72) Erfinder: KUNERT, Niels, 73113 Ottenbach (DE); WIDMANN, Dietmar, 71397 Leutenbach (DE); ARENZ, Martin Christoph, 70372 Stuttgart (DE); DIETENBERGER, Michael, 71334 Waiblingen (DE); ALBER, Johannes, 70190 Stuttgart (DE); KÜPER, Jan-Eilert, 71729 Erdmannshausen (DE); BONIFER, Marcus, 63450 Hanau (DE); HILDENBRAND, Hans, 63450 Hanau (DE)
(74) Vertreter: Reinhardt, Annette

(56) Entgegenhaltungen:
- DE-A1- 19 643 191
- US-A1- 2009 013 673
- US-A1- 2013 183 215

## Beschreibung

Die Erfindung betrifft einen Abgasschalldämpfer der im Oberbegriff des Anspruchs 1 angegebenen Gattung, einen Zweitaktmotor oder Viertaktmotor mit einem Abgasschalldämpfer sowie einen Katalysator für einen Abgasschalldämpfer.

Aus der JP 2009-156158 A ist ein Abgasschalldämpfer bekannt, der einen Durchströmungskörper aus Drahtgestrick aufweist, der mit katalytischem Material beschichtet ist.

Aus der DE 196 43 191 A1 ist ein Abgasschalldämpfer mit einer Katalysatoranordnung bekannt. Die Katalysatoranordnung umfasst ein Funkenauffangdrahtnetz und ein von dem Funkenauffangdrahtnetz gehaltenes flexibles Katalysatorgewebe.

Die US 2013/0183215 A1 offenbart einen Dieselpartikelfilter mit einem ersten Partikelfilter, der aus Filtrationsmaterial aufgebaut ist, das zwischen gewellten Lagen von Metallfolie aufgewickelt ist. Stromab ist ein zweiter Partikelfilter angeordnet, der eine monolithische Keramikkonstruktion sein kann. Der zweite Partikelfilter kann Zonen mit unterschiedlicher Beschichtung aufweisen, beispielsweise an seinen Enden mit katalytischer Beschichtung beschichtet sein und im mittleren Bereich keine katalytische Beschichtung aufweisen.

Verbrennungsmotorisch angetriebene handgeführte Arbeitsgeräte wie beispielsweise Motorsägen, Trennschleifer, Freischneider, Blasgeräte, Rasenmäher oder dgl. unterliegen ständig steigenden gesetzlichen Anforderungen im Hinblick auf die Zusammensetzung der Abgase. Um diese Anforderungen zu erfüllen, ist es auch bei derartigen Kleinmotoren bekannt, Katalysatoren zur Abgasnachbehandlung einzusetzen. Die Rahmenbedingungen für derartige Katalysatoren in handgeführten Arbeitsgeräten unterscheiden sich in vielerlei Hinsicht von den Rahmenbedingungen beispielsweise im Automobilbereich. Aufgrund des begrenzten zur Verfügung stehenden Bauraums müssen Abgasschalldämpfer in derartigen handgeführten Arbeitsgeräten vergleichsweise klein ausgebildet werden. Gleichzeitig muss ein Kontakt des Bedieners mit heißen Teilen des Arbeitsgeräts vermieden werden. Daher gelten auch im Hinblick auf die Abgastemperaturen strenge Anforderungen. Handgeführte Arbeitsgeräte, die von einem Verbrennungsmotor angetrieben werden, besitzen üblicherweise keine eigene Energieversorgung, so dass eine elektrische Vorheizung des Katalysators keine Option ist. Auch sind die zur Verfügung stehenden Sensoren i.d.R. begrenzt. Üblicherweise sind keine Lambdasonden oder dgl. vorhanden. Häufig sind die zum Einsatz kommenden Verbrennungsmotoren gemischgeschmierte Motoren, so dass das Abgas einen erheblichen Anteil an Partikeln enthält, die im Abgasschalldämpfer reduziert werden sollen. Dadurch, dass der Kraftstoff bei gemischgeschmierten Motoren mindestens teilweise ins Kurbelgehäuse des Verbrennungsmotors zugeführt wird, ist eine zyklusgenaue Dosierung von Kraftstoff nicht möglich. Die Zusammensetzung des Abgases schwankt daher bei derartigen Kleinmotoren deutlich stärker als beispielsweise im Automobilbereich, wo eine zyklusgenaue Steuerung der unmittelbar in den Brennraum eingespritzten Kraftstoffmenge erfolgt.

Sowohl im Hinblick auf Temperatur und Gewicht als auch im Hinblick auf schwankende Abgaszusammensetzungen sind an Abgasschalldämpfer für derartige handgeführte Arbeitsgeräte daher andere Anforderungen zu stellen als an Abgasschalldämpfer, wie sie im Automobilbereich bzw. für Dieselmotoren oder für getrenntgeschmierte Viertaktmotoren eingesetzt werden.

Der Erfindung liegt die Aufgabe zugrunde, einen Abgasschalldämpfer der gattungsgemäßen Art zu schaffen, der einfach und robust aufgebaut ist und der insbesondere für gemischgeschmierte Verbrennungsmotoren einsetzbar ist. Weitere Aufgaben der Erfindung liegen darin, einen Zweitaktmotor oder gemischgeschmierten Viertaktmotor und einen Katalysator für einen Abgasschalldämpfer anzugeben.

Diese Aufgabe wird durch einen Abgasschalldämpfer mit den Merkmalen des Anspruchs 1 gelöst. Bezüglich des Zweitaktmotors oder gemischgeschmierten Viertaktmotors wird die Aufgabe durch einen Zweitaktmotor oder gemischgeschmierten Viertaktmotor mit den Merkmalen des Anspruchs 26 gelöst. Bezüglich des Katalysators wird die Aufgabe durch einen Katalysator mit den Merkmalen des Anspruchs 27 gelöst.

Es ist vorgesehen, dass der Abgasschalldämpfer einen Katalysator umfasst, dessen Durchströmungskörper mindestens einen Drahtkörper umfasst. Zumindest ein erster Teilbereich des Durchströmungskörpers ist mit katalytisch wirkender Beschichtung beschichtet. Der Durchströmungskörper weist mindestens einen zweiten Teilbereich auf, der eine geringere Menge katalytisch wirkender Beschichtung bezogen auf das Volumen aufweist als der erste Teilbereich. Dabei kann vorgesehen sein, dass der zweite Teilbereich keine katalytisch wirkende Beschichtung aufweist. Es kann jedoch auch vorgesehen sein, dass der erste Teilbereich und der zweite Teilbereich mit unterschiedlichen Mengen katalytisch wirkender Beschichtung beschichtet sind.

Dadurch, dass der Durchströmungskörper mindestens einen Drahtkörper umfasst, kann der Durchströmungskörper einfach und stabil aufgebaut werden. Unter einem Drahtkörper wird vorliegend ein formstabiler Körper verstanden, der aus mindestens einem Draht aus Metall gebildet ist. Ein Draht ist dabei ein dünnes, langgestrecktes, biegsames Metallteil. Der Draht weist vorzugsweise einen runden Querschnitt auf. Auch ein eckiger Querschnitt kann vorteilhaft sein. Der Querschnitt des Drahts ist über dessen Länge im Rahmen der üblichen Fertigungstoleranzen konstant. Der Draht ist bevorzugt durch Ziehen hergestellt.

Das Volumen des ersten Teilbereichs beträgt vorteilhaft 5% bis 90%, insbesondere 5% bis 80% des Gesamtvolumens des Durchströmungskörpers. Besonders vorteilhaft beträgt das Volumen des ersten Teilbereichs höchstens 50%, insbesondere höchstens 30% des Gesamtvolumens des Durchströmungskörpers. Als besonders vorteilhaft hat sich ein Volumen des ersten Teilbereichs von 10% bis 20% des Gesamtvolumens des Durchströmungskörpers erwiesen.

Das Volumen des zweiten Teilbereichs beträgt vorteilhaft 10% bis 95%, insbesondere 20% bis 95% des Gesamtvolumens des Durchströmungskörpers. Besonders vorteilhaft beträgt das Volumen des zweiten Teilbereichs mindestens 50%, insbesondere mindestens 70% des Gesamtvolumens des Durchströmungskörpers. Als besonders vorteilhaft hat sich ein Volumen des zweiten Teilbereichs von 80% bis 90% des Gesamtvolumens des Durchströmungskörpers erwiesen.

Das Gesamtvolumen des Durchströmungskörpers kann beispielsweise von 10 cm³ bis 200 cm³, insbesondere von 20 cm³ bis 100 cm³ betragen.

Der Durchmesser des Drahtes des Drahtkörpers oder, bei unrundem Querschnitt, die größte Erstreckung des Drahtes im Querschnitt beträgt vorteilhaft von 0,1 mm bis 2 mm, insbesondere von 0,2 mm bis 1 mm. Dadurch ist der Draht ausreichend formstabil im Betrieb, jedoch auch so elastisch, dass auf den Drahtkörper einwirkende äußere Kräfte im Betrieb nicht zu bleibenden Verformungen führen. Als besonders vorteilhaft wird ein Durchmesser von 0,3 mm bis 1 mm angesehen. Besonders bevorzugt beträgt der Durchmesser des Drahtes höchstens 0,5 mm.

Dadurch, dass der Durchströmungskörper zumindest zwei Teilbereiche mit unterschiedlichen Mengen katalytisch wirkender Beschichtung bezogen auf das Volumen aufweist, findet die katalytische Umsetzung des Abgases überwiegend oder vollständig in dem ersten Teilbereich statt. Dadurch erfolgt in dem ersten Teilbereich eine schnelle und starke Erhitzung. Der zweite Teilbereich des Durchströmungskörpers dient vorzugsweise überwiegend zur Partikelreduktion. In Abgasen von gemischgeschmierten Verbrennungsmotoren ist Schmieröl in Tröpfchenform enthalten, das von dem Katalysator verdampft wird. Hierzu ist eine ausreichend hohe Temperatur des Katalysators notwendig. Zudem ist eine ausreichend lange Verweildauer der Öltröpfchen in dem Katalysator notwendig. Der zweite Teilbereich wird von dem ersten Teilbereich bevorzugt schnell erhitzt. Dadurch verbessert sich die partikel reduzierende Wirkung des zweiten Teilbereichs. Öltröpfchen werden verdampft, sobald die hierfür benötigten Temperaturen erreicht sind. Bei heutzutage üblicherweise verwendeten Schmierölen kann die Verdampfungstemperatur beispielsweise in der Größenordnung von 600°C bis 700°C liegen. Der zweite Teilbereich dient außerdem zur thermischen Isolierung des ersten Teilbereichs. Auch für Katalysatoren, bei denen die Partikelreduzierung nicht im Vordergrund steht, ist der zweite Teilbereich daher vorteilhaft. Der erste Teilbereich, der mit katalytisch wirkender Beschichtung, insbesondere mit Edelmetall beschichtet ist, dient vorzugsweise überwiegend zum Konvertieren von Kohlenwasserstoffen und/oder Stickoxiden.

Vorteilhaft weist der zweite Teilbereich keine katalytisch wirkende Beschichtung auf. Als katalytisch wirkende Beschichtung ist vorliegend eine Beschichtung bezeichnet, die als Katalysator wirkt, die also die Aktivierungsenergie für die chemische Umsetzung der Abgase senkt und dadurch die Reaktionsgeschwindigkeit erhöht. Ein Washcoat wird vorliegend nicht als katalytische Beschichtung betrachtet. Als Washcoat wird eine Beschichtung angesehen, die die Oberfläche vergrößert, ohne die Aktivierungsenergie für die chemische Umsetzung zu senken. Der zweite Teilbereich weist vorteilhaft keine katalytisch wirkende Beschichtung auf, kann aber einen Washcoat aufweisen.

Ein einfacher Aufbau des Durchströmungskörpers ergibt sich, wenn der Durchströmungskörper aus mehreren formstabilen Einzelkörpern zusammengesetzt ist. Mindestens zwei der Einzelkörper sind dabei Drahtkörper. Jeder der Einzelkörper weist dabei bevorzugt in allen Bereichen die gleiche Beschichtung auf, wenn der Einzelkörper kein Teil des zweiten Teilbereichs ist und die gleiche Beschichtung oder keine Beschichtung auf, wenn der Einzelkörper Teil des zweiten Teilbereichs ist. Dadurch können die Einzelkörper im Ganzen beschichtet werden. Eine Abdeckung unterschiedlicher Bereiche der Einzelkörper beim Beschichtungsvorgang kann entfallen. Dadurch ist der Beschichtungsvorgang vereinfacht. Dadurch, dass jeder Einzelkörper in sich formstabil ist, ist die Herstellung ebenfalls vereinfacht. Bevorzugt besteht der Durchströmungskörper vollständig aus formstabilen Einzelkörpern. Die Anzahl der Einzelkörper des Durchströmungskörpers beträgt vorteilhaft höchstens 10, besonders vorteilhaft höchstens 5.

Vorteilhaft ist jeder Einzelkörper lediglich Teil eines einzigen Teilbereichs. Teilbereiche mit unterschiedlicher Menge katalytisch wirkender Beschichtung werden durch unterschiedliche Einzelkörper, insbesondere unterschiedliche Drahtkörper, gebildet.

Vorteilhaft sind mindestens 50% der zweiten Stirnseite von dem zweiten Teilbereich gebildet. In besonders bevorzugter Gestaltung wird die zweite Stirnseite vollständig von dem zweiten Teilbereich gebildet. Dadurch kann die Temperatur der aus dem Katalysator austretenden Abgase abgesenkt werden. Gleichzeitig kann die Verweildauer der Abgase in dem Katalysator verlängert werden.

Vorteilhaft erstreckt sich der erste Teilbereich in einem Querschnitt durch den ersten Teilbereich senkrecht zur Strömungsrichtung über mindestens 30%, insbesondere mindestens 50% der Fläche des Durchströmungskörpers. Dadurch ist sichergestellt, dass ein ausreichend großer Anteil des Abgases unmittelbar durch den ersten Teilbereich strömt und Kohlenwasserstoffe und/oder Stickoxide, die in diesem Anteil des Abgases enthalten sind, katalytisch konvertiert werden. In einer vorteilhaften Ausführungsvariante ist vorgesehen, dass der erste Teilbereich sich in mindestens einem Querschnitt durch den ersten Teilbereich senkrecht zur Strömungsrichtung über höchstens 80%, insbesondere höchstens 70% der Fläche des Durchströmungskörpers in diesem Querschnitt erstreckt. Ein Teil des Abgases strömt daher in jedem Querschnitt durch den zweiten Teilbereich. Dadurch kann eine übermäßige Erhitzung des Abgasschalldämpfers und der Abgase vermieden werden.

In vorteilhafter, insbesondere alternativer Gestaltung ist vorgesehen, dass die in Strömungsrichtung gemessene Dicke des ersten Teilbereichs verglichen mit der Dicke des zweiten Teilbereichs vergleichsweise gering ist. Auch hierdurch kann eine übermäßige Erhitzung des Abgasschalldämpfers im Betrieb auf einfache Weise verhindert werden. Die vergleichsweise geringe Dicke des ersten Teilbereichs und die Erstreckung des ersten Teilbereichs nur über einen Teil der Querschnittsfläche des Durchströmungskörpers können alternativ oder kombiniert vorgesehen sein. Auch weitere oder andere Maßnahmen zur Verhinderung einer übermäßigen Erhitzung des Abgasschalldämpfers können vorgesehen sein.

Der erste Teilbereich ist durch mindestens einen ersten Drahtkörper und der zweite Teilbereich durch mindestens einen zweiten Drahtkörper gebildet. Dadurch kann ein einfacher Aufbau des Abgasschalldämpfers erzielt werden.

In einer besonders bevorzugten Ausführungsvariante ist der zweite Teilbereich durch genau zwei zweite Drahtkörper gebildet. Es kann jedoch auch vorgesehen sein, den zweiten Teilbereich durch einen einzigen zweiten Drahtkörper oder eine größere Anzahl zweiter Drahtkörper aufzubauen. In bevorzugter Gestaltung ist der erste Teilbereich durch genau einen ersten Drahtkörper gebildet. Auch eine größere Anzahl erster Drahtkörper, die den ersten Teilbereich bilden, kann jedoch vorgesehen sein.

Bei einer Ausführung, bei der der zweite Teilbereich durch mindestens zwei zweite Drahtkörper gebildet ist, ist bevorzugt vorgesehen, dass mindestens einer der zweiten Drahtkörper eine Vertiefung zur Aufnahme mindestens eines ersten Drahtkörpers aufweist. In bevorzugter Gestaltung ist der Durchströmungskörper durch die mindestens zwei zweiten Drahtkörper und den mindestens einen ersten Drahtkörper zusammengesetzt. Die Vertiefung zur Aufnahme des mindestens einen ersten Drahtkörpers bewirkt eine Fixierung des ersten Drahtkörpers in dem zweiten Drahtkörper, so dass sich ein einfacher Aufbau ergibt. Bevorzugt ist der Durchströmungskörper aus mehreren Drahtkörpern zusammengesetzt, deren Form so gewählt ist, dass die Drahtkörper nach dem Zusammensetzen zueinander vorfixiert sind.

In bevorzugter Gestaltung sind die Drahtkörper des Durchströmungskörpers in einem Katalysatorgehäuse des Katalysators angeordnet, insbesondere in dieses eingepresst oder in diesem festgeschweißt. Zusätzliche Befestigungsmittel können vorhanden sein, sind jedoch nicht zwingend erforderlich.

Der Durchströmungskörper weist vorteilhaft eine sich von der ersten Stirnseite zur zweiten Stirnseite erstreckende Umfangsfläche auf. Die Umfangsfläche des Durchströmungskörpers ist vorzugsweise die Fläche, die mit dem Katalysatorgehäuse in Kontakt steht. Die Umfangsfläche ist vorteilhaft zu mindestens 50%, insbesondere zu mindestens 80%, besonders bevorzugt vollständig von dem zweiten Teilbereich gebildet. Dadurch, dass ein großer Teil der Umfangsfläche des Durchströmungskörpers von dem zweiten Teilbereich gebildet ist, geht beim Einpressen des Durchströmungskörpers in das Katalysatorgehäuse nur eine geringe Menge oder keine katalytisch wirkende Beschichtung verloren.

In besonders bevorzugter Gestaltung umgibt der zweite Teilbereich den ersten Teilbereich vollständig. Der zweite Teilbereich bildet dabei vorteilhaft die erste und die zweite Stirnseite und die Umfangsfläche des Durchströmungskörpers, insbesondere, wenn der Durchströmungskörper keine weiteren Teilbereiche aufweist. Der erste Teilbereich ist dadurch durch den zweiten Teilbereich sowohl vor mechanischen Belastungen, insbesondere bei der Herstellung des Abgasschalldämpfers oder im Betrieb, als auch durch Partikel oder Beimischungen im Abgas wie beispielsweise Öl geschützt.

Ein einfacher, alternativer vorteilhafter Aufbau ergibt sich, wenn der erste Teilbereich und der zweite Teilbereich sich jeweils in mindestens einem Querschnitt über die gesamte senkrecht zur Strömungsrichtung gemessene Querschnittsfläche des Abgasschalldämpfers erstrecken. Die einzelnen Abschnitte des Durchströmungskörpers sind dadurch in Strömungsrichtung hintereinander angeordnet. Dabei können der erste Teilbereich und/oder der zweite Teilbereich in mehrere Abschnitte aufgeteilt sein, so dass sich ein scheibenartiger Aufbau des Katalysators ergibt. In bevorzugter Gestaltung weist jeder Teilbereich eine konstante, senkrecht zur Strömungsrichtung gemessene Dicke auf.

Vorteilhaft sind mindestens 50%, insbesondere mindestens 80% der ersten Stirnseite von dem zweiten Teilbereich gebildet. In besonders bevorzugter Gestaltung ist die erste Stirnseite vollständig von dem zweiten Teilbereich gebildet. Dadurch kommt Abgas und insbesondere im Abgas beigemischtes Öl und Partikel nicht unmittelbar mit dem ersten Teilbereich in Kontakt, sondern strömt zunächst durch den zweiten Teilbereich. Dadurch kann zumindest ein Teil des im Abgas enthaltenen Öls im zweiten Teilbereich zurückgehalten werden, so dass ein übermäßiges Zusetzen der katalytischen Beschichtung vermieden wird. Dadurch kann die Lebensdauer des Katalysators verlängert werden. In besonderes bevorzugter Gestaltung bildet der zweite Teilbereich sowohl die erste Stirnseite als auch die zweite Stirnseite. Dadurch, dass der zweite Teilbereich die zweite Stirnseite bildet, können geringere Temperaturen des aus dem Katalysator austretenden Abgases erreicht werden.

In alternativer vorteilhafter Gestaltung ist vorgesehen, dass die erste Stirnseite vollständig von dem ersten Teilbereich gebildet ist. Dadurch kann eine kompakte Bauform des Abgasschalldämpfers erreicht werden. Dass die erste Stirnseite vollständig von dem ersten Teilbereich gebildet ist, ist insbesondere dann vorteilhaft, wenn der erste Teilbereich durch einen grobmaschigen Metallkörper gebildet ist, durch den ein Teil des Abgases ohne Kontakt mit katalytischer Beschichtung hindurchströmen kann. Auch durch diese Gestaltung des ersten Teilbereichs kann ein vorschnelles Zusetzen des Abgasschalldämpfers beispielsweise mit Öl oder Partikeln im Bereich der katalytischen Beschichtung verhindert werden.

Bevorzugt beträgt die in Strömungsrichtung gemessene größte Dicke des ersten Teilbereichs weniger als die in Strömungsrichtung gemessene größte Dicke des zweiten Teilbereichs. Vorteilhaft beträgt die in Strömungsrichtung gemessene größte Dicke des ersten Teilbereichs höchstens 30% der in Strömungsrichtung gemessenen größten Dicke des zweiten Teilbereichs. Bevorzugt beträgt die in Strömungsrichtung gemessene größte Dicke des ersten Teilbereichs höchstens 20%, insbesondere höchstens 10% der in Strömungsrichtung gemessenen größten Dicke des zweiten Teilbereichs. Die größte Dicke eines Teilbereichs setzt sich, wenn der Teilbereich durch mehrere in Strömungsrichtung zueinander beabstandete Abschnitte gebildet ist, aus der Summe der Einzeldicken der Einzelabschnitte des Teilbereichs zusammen. Die größte Dicke eines Teilbereichs ist dabei die größte in Strömungsrichtung gemessene Erstreckung dieses Teilbereichs. Vorteilhaft sind die Dicke des ersten Teilbereichs und/oder die Dicke des zweiten Teilbereichs konstant. Der erste Teilbereich und/oder der zweite Teilbereich weisen demnach in allen Bereichen die gleiche Dicke auf.

Eine alternative vorteilhafte Gestaltung mit sehr einfachem Aufbau ergibt sich, wenn der erste Teilbereich zylindrisch gestaltet ist und der zweite Teilbereich als Hohlzylinder ausgebildet ist und der erste Teilbereich in dem zweiten Teilbereich angeordnet ist. Der Durchströmungskörper ist bevorzugt aus genau zwei Einzelkörpern gebildet, nämlich einem den ersten Teilbereich und einem den zweiten Teilbereich bildenden Einzelkörper.

In vorteilhafter Gestaltung erstreckt sich der erste Teilbereich über die gesamte in Strömungsrichtung gemessene Länge des Durchströmungskörpers. Dadurch kann ein vergleichsweise langer Strömungsweg des Abgases im ersten Teilbereich erreicht werden. Dies ermöglicht eine gute katalytische Umsetzung des Abgases.

Ein einfacher Aufbau ergibt sich, wenn mindestens ein Drahtkörper ein Metallgewebe ist. Das Metallgewebe ist bevorzugt ein einlagiges Gewebe aus Kettfäden und Schussfäden. Der Drahtdurchmesser des Metallgewebes ist vorteilhaft vergleichsweise groß, so dass sich vergleichsweise große Zwischenräume zwischen benachbarten Drähten des Metallgewebes ergeben. Dadurch kann ein Teil des Abgasstroms ohne Kontakt mit dem Metallgewebe durch die Öffnungen des Metallgewebes hindurchströmen, so dass eine übermäßige Erhitzung des Metallgewebes vermieden wird.

Vorteilhaft ist mindestens ein Drahtkörper aus in Form gepresstem Metalldraht gebildet. Ein derartiger Drahtkörper ist einfach herstellbar und erzielt bei unregelmäßiger Anordnung des Drahts eine sehr gute Partikelreduktion. Besonders vorteilhaft ist der in Form gepresste Metalldraht ein in Form gepresstes Metallgestrick. Auch eine andere Struktur des in Form gepressten Metalldrahts kann jedoch vorteilhaft sein.

Der Durchströmungskörper ist in einer vorteilhaften Ausführungsvariante durch mindestens zwei Einzelkörper mit unterschiedlicher Struktur ausgebildet. Bevorzugt sind alle Einzelkörper des Durchströmungskörpers in sich formstabil. Der Abgasschalldämpfer unterscheidet sich damit grundsätzlich von Durchströmungskörpern, die durch eine Vielzahl von unregelmäßigen Einzelfasern oder dgl. aufgebaut sind. Durch die vergleichsweise geringe Anzahl einzelner, formstabiler Körper, die den Durchströmungskörper bilden, wird eine einfache Herstellbarkeit und ein einfacher Aufbau des Katalysators erreicht. Vorteilhaft bestehen alle Einzelkörper, aus denen der Durchströmungskörper aufgebaut ist, aus Metall. In bevorzugter Gestaltung sind mindestens zwei Drahtkörper mit unterschiedlicher Struktur ausgebildet. Beispielsweise kann ein Drahtkörper ein Drahtgewebe und ein Drahtkörper in Form gepresstes Metallgestrick sein. Es kann jedoch auch vorgesehen sein, dass der Durchströmungskörper durch mindestens zwei Drahtkörper und mindestens einen Einzelkörper, der nicht aus Draht aufgebaut ist, besteht. Der weitere, nicht aus Draht ausgebildete Körper kann beispielsweise ein Metallgitter sein.

In einer vorteilhaften Ausführungsvariante ist der Durchströmungskörper ausschließlich durch erste Drahtkörper und zweite Drahtkörper gebildet. Dadurch ergibt sich ein einfacher Aufbau. In vorteilhafter alternativer Gestaltung umfasst der Durchströmungskörper mindestens ein Metallgitter. Das mindestens eine Metallgitter bildet dabei insbesondere den ersten Teilbereich. Es kann jedoch auch vorgesehen sein, dass ein oder mehrere Metallgitter den zweiten Teilbereich bilden.

Um die im Abgas enthaltenen Partikel wirkungsvoll zu verringern, muss der zweite Teilbereich im Betrieb eine ausreichend hohe Temperatur erreichen. Hierfür ist erfindungsgemäß die Erwärmung des zweiten Teilbereichs mittels des katalytisch beschichteten ersten Teilbereichs vorgesehen. Um eine sehr gute und gleichmäßige Erwärmung zu erreichen, ist vorteilhaft vorgesehen, dass der zweite Teilbereich mehrere voneinander getrennt ausgebildete Abschnitte umfasst, zwischen denen sich der erste Teilbereich erstreckt, wobei die zweiten Teilbereiche insbesondere über mindestens ein Wärmeleitelement miteinander verbunden sind. Das mindestens eine Wärmeleitelement erstreckt sich durch Abschnitte des zweiten Teilbereichs und erwärmt diese dadurch. Dadurch ergeben sich ein einfacher Aufbau und eine volle Umsetzfähigkeit des Katalysators bereits nach kurzer Betriebsdauer. Die zweiten Teilbereiche sind über das mindestens eine Wärmeleitelement vorteilhaft unmittelbar und in gerader Linie miteinander verbunden. Das mindestens eine Wärmeleitelement weist vorteilhaft eine höhere Wärmeleitfähigkeit auf als der zweite Teilbereich. Bevorzugt besteht das mindestens eine Wärmeleitelement aus einem Material, das eine höhere Wärmeleitfähigkeit aufweist als das den zweiten Teilbereich bildende Material. Eine höhere Wärmeleitfähigkeit kann beispielsweise auch durch eine andere Gestalt, beispielsweise durch einen größeren Materialquerschnitt, erreicht werden.

Vorteilhaft weist der Durchströmungskörper genau zwei Teilbereiche auf, die sich in der Menge katalytisch wirkender Beschichtung unterscheiden. Vorteilhaft weisen alle Abschnitte des ersten Teilbereichs die gleiche Menge katalytisch wirkender Beschichtung bezogen auf das Volumen auf. Insbesondere weisen alle Abschnitte des zweiten Teilbereichs die gleiche Menge katalytisch wirkender Beschichtung bezogen auf das Volumen auf. Besonders bevorzugt weist der zweite Teilbereich keine katalytisch wirkende Beschichtung auf.

Bevorzugt weist der zweite Teilbereich eine katalytische Beschichtung von weniger als 1 mg/cm³ auf. In bevorzugter Ausführung ist der zweite Teilbereich mit einem Washcoat beschichtet. Der zweite Teilbereich ist dabei insbesondere lediglich mit einem Washcoat beschichtet und weist keine katalytisch wirkende Beschichtung auf. Alternativ kann eine geringere katalytische Beschichtung bezogen auf das Volumen vorgesehen sein als im ersten Teilbereich. In besonders bevorzugter Ausführung ist der zweite Teilbereich unbeschichtet. Demnach weist der zweite Teilbereich weder einen Washcoat noch eine katalytisch wirkende Beschichtung auf.

Unter einem Washcoat wird eine Beschichtung zur Vergrößerung der Oberfläche verstanden. Beispielsweise kann der Washcoat aus Aluminiumoxid und/oder Ceroxid bestehen oder diese Materialien enthalten. Der Washcoat kann alternativ oder zusätzlich aus weiteren Materialien bestehen. Der Washcoat wird vorliegend nicht als katalytisch wirkende Beschichtung verstanden. Die katalytisch wirkende Beschichtung enthält vorteilhaft ein Edelmetall.

Eine vorteilhafte Gestaltung ergibt sich, wenn der Durchströmungskörper durch mindestens eine aufgewickelte Matte gebildet ist. Durch Aufwickeln einer Matte lässt sich der Durchströmungskörper auf einfache Weise herstellen.

Vorteilhaft ist der erste Teilbereich in Richtung quer zur Strömungsrichtung durch den Durchströmungskörper mindestens teilweise von dem zweiten Teilbereich umgeben. Besonders vorteilhaft ist der erste Teilbereich in Richtung quer zur Strömungsrichtung durch den Durchströmungskörper vollständig von dem zweiten Teilbereich umgeben.

Vorteilhaft sind der erste Teilbereich durch mindestens eine erste Matte und der zweite Teilbereich durch mindestens eine zweite Matte gebildet. Die mindestens eine erste Matte und die mindestens eine zweite Matte können dabei jeweils für sich hergestellt und im Ganzen mit Washcoat und/oder mit katalytisch wirkender Beschichtung beschichtet werden. Dadurch ist die Herstellung vereinfacht. In nicht erfindungsgemäßer, alternativer Gestaltung ist der Abgasschalldämpfer durch mindestens eine Matte gebildet, die sowohl den ersten Teilbereich oder einen Teil des ersten Teilbereichs als auch den zweiten Teilbereich oder einen Teil des zweiten Teilbereichs bildet und die in unterschiedlichen Längenabschnitten mit unterschiedlichen Mengen katalytisch wirkender Beschichtung bezogen auf das Volumen beschichtet ist.

In vorteilhafter Gestaltung weisen die mindestens eine erste Matte und die mindestens eine zweite Matte unterschiedliche Dicken auf. Alternativ oder zusätzlich kann vorgesehen sein, dass die mindestens eine erste Matte und die mindestens eine zweite Matte unterschiedliche in Strömungsrichtung gemessene Breiten aufweisen. Dadurch kann erreicht werden, dass eine Stirnseite des Katalysators nur von einer der Matten gebildet ist. In alternativer Gestaltung kann vorgesehen sein, dass die erste Matte und die zweite Matte mit Versatz in Strömungsrichtung zueinander aufgewickelt werden. Auch dadurch kann erreicht werden, dass sich an einer Stirnseite des Katalysators nur einer der Teilbereiche erstreckt.

Der aus mindestens einer aufgewickelten Matte hergestellte Durchströmungskörper ist vorteilhaft formstabil. Hierzu kann vorgesehen sein, dass der Durchströmungskörper nach dem Aufwickeln in Form gepresst wird. Erfindungsgemäß ist mindestens eine Matte aus Metalldraht gebildet. Alternativ oder zusätzlich kann vorgesehen sein, dass mindestens eine Matte ein Gestrick oder ein Gewirk ist.

Es kann vorgesehen, dass zuerst eine erste Matte aufgewickelt wird und anschließend eine zweite Matte um die erste Matte herum aufgewickelt wird. Dadurch bildet die erste Matte einen inneren, ersten Teilbereich und die zweite Matte einen zweiten Teilbereich, der sich an der Außenseite des ersten Teilbereichs um den ersten Teilbereich herum erstreckt. Der erste Teilbereich kann dadurch als kompakter Kern des Durchströmungskörpers ausgebildet werden.

In alternativer vorteilhafter Ausführung ist vorgesehen, dass die erste und die zweite Matte vor dem Aufwickeln aufeinandergelegt werden. Dadurch entsteht ein Durchströmungskörper, der im Querschnitt mehrere aufeinanderfolgende Schichten des ersten Teilbereichs und des zweiten Teilbereichs aufweist. Dabei sind vorteilhaft in mindestens einem Querschnitt mindestens zwei Schichten jedes Teilbereichs vorgesehen. Die Matten können dabei unterschiedliche Dicken und / oder unterschiedliche Breiten aufweisen und/oder in Strömungsrichtung mit Versatz zueinander aufgewickelt sein. Besonders bevorzugt liegen die erste Matte und die zweite Matte vor dem Aufwickeln unmittelbar aufeinander auf. Vorteilhaft stehen die Matten über ihre gesamte Länge miteinander in Kontakt und werden ohne Zwischenlage weiterer Lagen aufgewickelt. Dadurch kann Abgas ungehindert zwischen den Lagen der Teilbereiche hin- und herströmen.

In vorteilhafter Gestaltung ist eine erste, stromauf liegende Stirnseite des Durchströmungskörpers vollständig von dem zweiten Teilbereich gebildet. Alternativ oder zusätzlich ist vorteilhaft vorgesehen, dass eine zweite, stromab liegende Stirnseite des Durchströmungskörpers vollständig von dem zweiten Teilbereich gebildet ist. Es kann auch vorteilhaft sein, dass mindestens eine Stirnseite des Durchströmungskörpers vollständig von dem ersten Teilbereich gebildet ist.

Der Katalysator weist insbesondere ein Katalysatorgehäuse auf. In dem Katalysatorgehäuse ist vorzugsweise der Durchströmungskörper angeordnet. In besonders vorteilhafter Gestaltung ist der Durchströmungskörper in das Katalysatorgehäuse eingepresst. Dadurch werden ein einfacher Aufbau und eine einfache Herstellbarkeit ohne zusätzliche Befestigungsmittel erreicht. In besonders bevorzugter Gestaltung wird der Durchströmungskörper mit wenigen Millimetern Überdeckung in das Katalysatorgehäuse eingepresst. Das Einpressen des Durchströmungskörpers ist insbesondere dann vorteilhaft, wenn der Durchströmungskörper mindestens teilweise, insbesondere vollständig durch in Form gepressten Metalldraht hergestellt ist. Der Durchströmungskörper weist dann eine ausreichend hohe Elastizität auf und ist nach dem Einpressvorgang stabil im Katalysatorgehäuse gehalten.

Das Katalysatorgehäuse weist vorteilhaft mindestens eine Eintrittsöffnung und mindestens eine Austrittsöffnung auf. Die mindestens eine Eintrittsöffnung und die mindestens eine Austrittsöffnung sind vorteilhaft zumindest teilweise zueinander versetzt angeordnet. In bevorzugter Gestaltung liegen die mindestens eine Eintrittsöffnung und die mindestens eine Austrittsöffnung nicht in Überdeckung zueinander. Die Überdeckung der Eintrittsöffnung und Austrittsöffnung bezieht sich dabei auf die Einströmrichtung des Abgases durch die jeweilige Eintrittsöffnung, also auf eine Richtung senkrecht zur Fläche der mindestens einen Eintrittsöffnung. Dadurch, dass die mindestens eine Eintrittsöffnung und die mindestens eine Austrittsöffnung zumindest teilweise zueinander versetzt angeordnet sind, insbesondere nicht in Überdeckung zueinander liegen, wird sichergestellt, dass das Abgas innerhalb des Katalysatorgehäuses umgelenkt wird. Dadurch kann der Strömungsweg des Abgases im Katalysatorgehäuse auf einfache Weise verlängert und so die Umsetzung verbessert werden.

In besonders vorteilhafter Gestaltung ist der Gesamtströmungsquerschnitt aller Austrittsöffnungen kleiner als der Gesamtströmungsquerschnitt aller Eintrittsöffnungen. Dadurch wird der Staudruck im Katalysatorgehäuse und damit die Verweilzeit des Abgases innerhalb des Katalysatorgehäuses erhöht.

Der Abgasschalldämpfer ist insbesondere der Abgasschalldämpfer eines Zweitaktmotors oder eines gemischgeschmierten Viertaktmotors. Bei derartigen gemischgeschmierten Motoren kann im Abgas Öl enthalten sein. Insbesondere für derartige Verbrennungsmotoren ist der angegebene Aufbau eines Abgasschalldämpfers mit Katalysator vorteilhaft. Auch ein Einsatz des Abgasschalldämpfers für getrenntgeschmierte Verbrennungsmotoren, insbesondere für getrenntgeschmierte Viertaktmotoren, ist möglich. Der Abgasschalldämpfer ist insbesondere für ein handgeführtes Arbeitsgerät wie eine Motorsäge, einen Trennschleifer, einen Freischneider, ein Blasgerät, ein Rasenmäher, ein Sprühgerät oder dgl. vorteilhaft.

Ausführungsbeispiele der Erfindung werden im Folgenden anhand der Zeichnung erläutert. Es zeigen:
- Fig. 1: eine schematische Schnittdarstellung eines handgeführten Arbeitsgeräts,
- Fig. 2: eine schematische Schnittdarstellung durch den Abgasschalldämpfer des handgeführten Arbeitsgeräts aus Fig. 1,
- Fig. 3: eine perspektivische, schematische Darstellung des Katalysatorgehäuses des Abgasschalldämpfers,
- Fig. 4: eine perspektivische, schematische Darstellung des Durchströmungskörpers des Katalysators,
- Fig. 5: eine perspektivische Darstellung des Durchströmungskörpers,
- Fig. 6: eine perspektivische Darstellung der Drahtkörper des Durchströmungskörpers,
- Fig. 7: eine schematische Schnittdarstellung eines alternativen Ausführungsbeispiels eines Durchströmungskörpers,
- Fig. 8: eine schematische Darstellung des Durchströmungskörpers aus Fig. 7 bei Blickrichtung in Richtung des Pfeils VIII in Fig. 7,
- Fig. 9: eine schematische Darstellung eines Verfahrens zur Herstellung eines Durchströmungskörpers,
- Fig. 10: eine schematische Darstellung von Matten, aus denen der Durchströmungskörper hergestellt werden kann,
- Fig. 11 und 12: schematische Darstellungen von Durchströmungskörpern,
- Fig. 13: eine schematische Darstellung von Matten, aus denen ein weiteres Ausführungsbeispiel eines Durchströmungskörpers hergestellt werden kann,
- Fig. 14: eine schematische Darstellung eines aus den Matten aus Fig. 13 hergestellten Durchströmungskörpers,
- Fig. 15: eine schematische Darstellung von Matten, aus denen ein weiteres Ausführungsbeispiel eines Durchströmungskörpers hergestellt werden kann,
- Fig. 16: eine schematische Darstellung eines aus den Matten aus Fig. 15 hergestellten Durchströmungskörpers,
- Fig. 17 bis 19: schematische Schnittdarstellungen durch alternative Ausführungen von Durchströmungskörpern in einem Katalysatorgehäuse,
- Fig. 20 und 21: Darstellungen von möglichen Ausführungen von Einzelkörpern des Durchströmungskörpers, wobei Fig. 20 eine nicht erfindungsgemäße Gestaltung zeigt,
- Fig. 22: eine schematische Schnittdarstellung durch eine weitere alternative Ausführung eines Durchströmungskörpers in einem Katalysatorgehäuse,
- Fig. 23: eine schematische Darstellung eines weiteren Ausführungsbeispiels eines Durchströmungskörpers,
- Fig. 24: eine schematische Schnittdarstellung eines gemischgeschmierten Viertaktmotors.

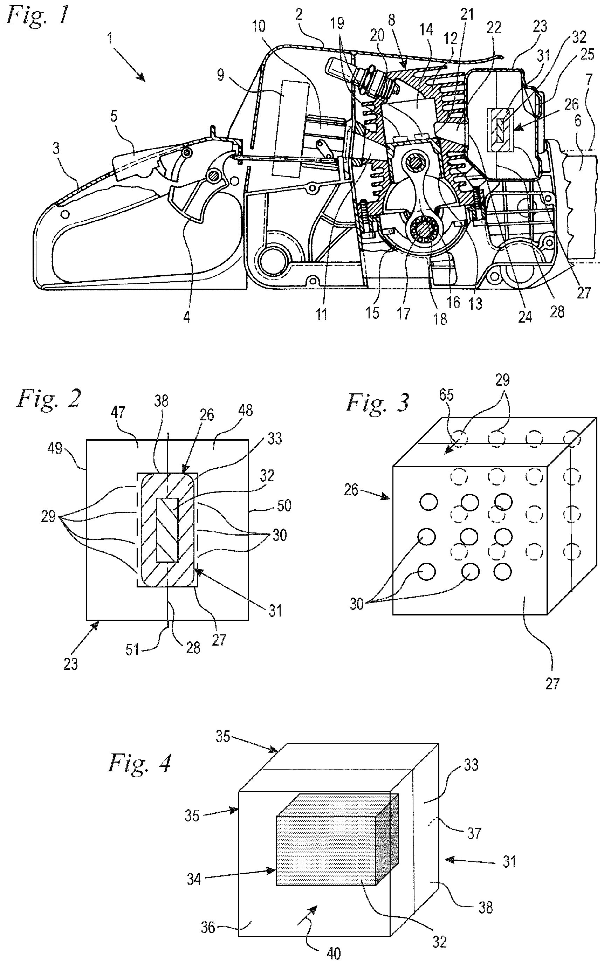

Fig. 1 zeigt als Ausführungsbeispiel für ein handgeführtes Arbeitsgerät eine Motorsäge 1. Das Arbeitsgerät ist insbesondere ein tragbares Arbeitsgerät. Das handgeführte Arbeitsgerät kann beispielsweise auch ein Trennschleifer, ein Blasgerät, ein Freischneider, ein Sprühgerät, ein Rasenmäher oder dgl. sein. Die Motorsäge 1 weist ein Gehäuse 2 auf, an dem ein hinterer Handgriff 3 angeordnet ist. Am hinteren Handgriff 3 sind Bedienelemente, im Ausführungsbeispiel ein Gashebel 4 sowie eine Gashebelsperre 5, angeordnet. Die Motorsäge 1 weist eine Führungsschiene 6 auf, an der eine Sägekette 7 umlaufend angeordnet ist. Die Sägekette 7 ist von einem Verbrennungsmotor, im Ausführungsbeispiel einem gemischgeschmierten Verbrennungsmotor, angetrieben. Der Verbrennungsmotor ist im Ausführungsbeispiel im Gehäuse 2 angeordnet. In Fig. 1 ist als Verbrennungsmotor ein Zweitaktmotor 8 dargestellt. Der Zweitaktmotor 8 saugt Verbrennungsluft über einen Luftfilter 9 an. Der Luftfilter 9 ist über einen Ansaugkanal 11 mit einem Kurbelgehäuse 15 des Zweitaktmotors 8 verbunden. In den Ansaugkanal 11 wird Kraftstoff von einer Kraftstoffzuführeinrichtung 10, im Ausführungsbeispiel einem Vergaser, zugeführt. Anstatt des Vergasers kann die Kraftstoffzuführeinrichtung 10 auch durch ein oder mehrere Kraftstoffventile gebildet sein. Die Zufuhr von Kraftstoff kann auch unmittelbar in das Kurbelgehäuse 15 erfolgen.

Der Zweitaktmotor 8 weist einen Zylinder 12 auf, in dem ein Kolben 13 hin- und hergehend gelagert ist. Der Kolben 13 begrenzt einen in dem Zylinder 12 ausgebildeten Brennraum 14. Der Kolben 13 treibt über ein Pleuel 16 eine im Kurbelgehäuse 15 um eine Drehachse 18 drehbar gelagerte Kurbelwelle 17 an. Der Innenraum des Kurbelgehäuses 15 ist im Bereich des unteren Totpunkts des Kolbens 13 über mehrere Überströmkanäle 19 fluidisch mit dem Brennraum 14 verbunden. In den Brennraum 14 ragt eine Zündkerze 20. Aus dem Brennraum 3 führt eine Auslassöffnung 21. Die Auslassöffnung 21 ist über einen Auslasskanal 22 mit dem Abgaseinlass 24 eines Abgasschalldämpfers 23 verbunden. Aus dem Abgasschalldämpfer 23 führt ein Abgasauslass 25. Über den Abgasauslass 25 treten die Abgase in die Umgebung aus.

Im Betrieb des Zweitaktmotors 8 werden beim Aufwärtshub des Kolbens 13 in den Innenraum des Kurbelgehäuses 15 Verbrennungsluft und Kraftstoff angesaugt. Beim darauffolgenden Abwärtshub des Kolbens 13 wird das Kraftstoff/Luft-Gemisch im Kurbelgehäuse 15 verdichtet. Die Verbindung der Überströmkanäle 19 mit dem Brennraum 14 ist vom Kolben 13 gesteuert. Sobald die Überströmkanäle 19 zum Brennraum 14 öffnen, strömt Kraftstoff/Luft-Gemisch aus dem Kurbelgehäuse 15 in den Brennraum 14 ein. Beim darauffolgenden Aufwärtshub des Kolbens 13 wird das Kraftstoff/Luft-Gemisch im Brennraum 14 verdichtet und im Bereich des oberen Totpunkts des Kolbens 13 von der Zündkerze 20 gezündet. Die darauffolgende Verbrennung beschleunigt den Kolben 13 in Richtung zum Kurbelgehäuse 15. Die Auslassöffnung 21 ist vom Kolben 13 gesteuert. Sobald die Auslassöffnung 21 vom Kolben 13 geöffnet wird, strömen Abgase aus dem Brennraum 14 aus, und über die Überströmkanäle 19 strömt Frischgemisch in den Brennraum 14 nach.

Der Zweitaktmotor 8 kann auch ein mit Spülvorlage arbeitender Zweitaktmotor sein, bei dem in den Überströmkanälen 19 Luft vorgelagert wird, die Abgase aus dem Brennraum 14 ausspült, bevor frisches Kraftstoff/Luft-Gemisch aus dem Kurbelgehäuse 15 nachströmt.

Die rotierenden Teile im Kurbelgehäuse 15 werden von dem Kraftstoff/Luft-Gemisch, das im Innenraum des Kurbelgehäuses 15 vorkomprimiert wird, geschmiert. Hierzu ist dem Kraftstoff Zweitaktöl beigemischt. Das Zweitaktöl führt während der Verbrennung zu Rußbildung und kann je nach Ablauf der Verbrennung auch unverbrannt aus dem Brennraum 14 in den Abgasschalldämpfer 23 übertreten.

Der Abgasschalldämpfer 23 kann jeden üblichen Aufbau aufweisen. Vorzugsweise besteht der Abgasschalldämpfer 23 aus mehreren, an einem umlaufenden Rand 51 (Fig. 2) miteinander verbundenen Metallschalen. Der Abgasschalldämpfer 23 weist einen Katalysator 26 auf. Im Ausführungsbeispiel ist der Katalysator 26 in einer Trennwand 28 des Abgasschalldämpfers 23 gehalten. Im Ausführungsbeispiel strömt das gesamte Abgas durch den Katalysator 26. Der Katalysator 26 weist ein Katalysatorgehäuse 27 auf. In dem Katalysatorgehäuse 27 ist ein Durchströmungskörper 31 des Katalysators 26 angeordnet, dessen Aufbau im Folgenden erläutert wird.

Fig. 2 zeigt den Abgasschalldämpfer 23 im Einzelnen. Der Abgasschalldämpfer 23 umfasst im Ausführungsbeispiel eine erste Teilschale 49 und eine zweite Teilschale 50, die an dem umlaufenden Rand 51 miteinander verbunden sind. Der Rand 51 ist vorzugsweise umgebördelt. Im Ausführungsbeispiel ist auch die Trennwand 28 am Rand 51 gehalten. Die Teilschalen 49 und 50 können beispielsweise Tiefziehteile aus Blech sein. Der Abgasschalldämpfer 23 kann weitere Teilschalen umfassen. In der ersten Teilschale 49 ist ein erster Schalldämpferraum 47 ausgebildet und in der zweiten Teilschale 50 ein zweiter Schalldämpferraum 48. Die beiden Schalldämpferräume 47 und 48 sind durch die Trennwand 28 getrennt.

Im Strömungsweg zwischen den beiden Schalldämpferräumen 47 und 48 ist der Katalysator 26 angeordnet. Das Katalysatorgehäuse 27 weist im Ausführungsbeispiel eine Vielzahl von Eintrittsöffnungen 29 auf, über die Abgas in den Innenraum des Katalysatorgehäuses 27 eintritt. Das Katalysatorgehäuse 27 weist Austrittsöffnungen 30 auf, über die das Abgas aus dem Katalysatorgehäuse 27 austritt. Im Ausführungsbeispiel tritt das Abgas aus dem Schalldämpferraum 47 über die Eintrittsöffnungen 29 in das Katalysatorgehäuse 27 ein und durch die Austrittsöffnungen 30 in den zweiten Schalldämpferraum 48 aus. Auch eine andere Anordnung des Katalysators 26 im Strömungsweg kann vorgesehen sein.

Im Katalysatorgehäuse 27 ist ein Durchströmungskörper 31 angeordnet. Der Durchströmungskörper 31 weist eine Umfangsfläche 38 auf, die mit dem Katalysatorgehäuse 27 in Kontakt steht. Vorteilhaft steht die gesamte Umfangsfläche 38 in Kontakt mit dem Katalysatorgehäuse 27.

Vorteilhaft strömt das gesamte Abgas durch den Durchströmungskörper 31. Der Durchströmungskörper 31 weist einen ersten Teilbereich 32 und einen zweiten Teilbereich 33 auf. Die Teilbereiche 32 und 33 unterscheiden sich in der Menge katalytisch wirkender Beschichtung bezogen auf das Volumen des jeweiligen Teilbereichs 32, 33. Der erste Teilbereich 32 weist eine größere Menge katalytisch wirkender Beschichtung bezogen auf das Volumen auf als der zweite Teilbereich 33. Vorteilhaft ist im ersten Teilbereich 32 die Dicke der katalytisch wirkenden Beschichtung größer als im zweiten Teilbereich 33. In bevorzugter Ausführungsvariante weist der zweite Teilbereich 33 keine katalytisch wirkende Beschichtung auf. Der zweite Teilbereich 33 kann zur Vergrößerung der Oberfläche einen Washcoat aufweisen. Es kann auch vorgesehen sein, dass der zweite Teilbereich 33 keine Beschichtung, also weder einen Washcoat noch eine katalytisch wirkende Beschichtung, aufweist.

Fig. 3 zeigt die Gestaltung und Anordnung der Eintrittsöffnungen 29 und Austrittsöffnungen 30. Wie Fig. 3 zeigt, ist die Anzahl der Austrittsöffnungen 30 geringer als die der Eintrittsöffnungen 29. Im Ausführungsbeispiel weisen Eintrittsöffnungen 29 und Austrittsöffnungen 30 jeweils den gleichen Querschnitt auf. Dadurch ist der freie Strömungsquerschnitt aller Eintrittsöffnungen 29 größer als der freie Strömungsquerschnitt aller Austrittsöffnungen 30. Die Eintrittsöffnungen 29 sind versetzt zu den Austrittsöffnungen 30 angeordnet. Die Eintrittsöffnungen 29 überdecken die Austrittsöffnungen 30 in Einströmrichtung 65 gesehen nicht. Dadurch wird das Abgas innerhalb des Katalysatorgehäuses 27 umgelenkt. Eine teilweise Überdeckung der Eintrittsöffnungen 29 mit den Austrittsöffnungen 30 in Einströmrichtung 65 kann vorteilhaft sein.

Die Einströmrichtung 65 ist die Richtung, durch die das Abgas durch die jeweilige Eintrittsöffnung 29 einströmt. Die Einströmrichtung 65 ist senkrecht zur Fläche der jeweiligen Eintrittsöffnung 29 gerichtet. Alternativ kann auch vorgesehen sein, dass die Anzahl der Eintrittsöffnungen 29 und der Austrittsöffnungen 30 gleich ist, die Strömungsquerschnitte sich jedoch unterscheiden, so dass der Gesamtströmungsquerschnitt aller Austrittsöffnungen kleiner als der Gesamtströmungsquerschnitt aller Eintrittsöffnungen ist. Auch eine unterschiedliche Anzahl von Eintrittsöffnungen und Austrittsöffnungen in Kombination mit unterschiedlichen Strömungsquerschnitten der Eintrittsöffnungen und Austrittsöffnungen können vorteilhaft sein.

Fig. 4 zeigt die Gestaltung des Durchströmungskörpers 31 im Einzelnen. Im Ausführungsbeispiel ist der Durchströmungskörper 31 durch drei Drahtkörper 34, 35 gebildet. Es ist ein erster Drahtkörper 34 vorgesehen, der mit katalytisch wirkender Beschichtung versehen ist. Der erste Drahtkörper 34 bildet den ersten Teilbereich 32. Der zweite Teilbereich 33 wird durch zwei Drahtkörper 35 gebildet. Im Ausführungsbeispiel sind die beiden zweiten Drahtkörper 35 identisch. Einer der Drahtkörper 35 bildet eine erste Stirnseite 36 des Durchströmungskörpers 31. Der andere Drahtkörper 35 bildet eine gegenüberliegende zweite Stirnseite 37. Die Stirnseite 36 liegt bezogen auf die Strömungsrichtung 40 der Abgase stromauf des Durchströmungskörpers 31. Die erste Stirnseite 36 bildet die Anströmseite des Durchströmungskörpers 31. Durch die zweite Stirnseite 37 verlassen die Abgase den Durchströmungskörper 31. Die zweite Stirnseite 37 bildet die Abströmseite des Durchströmungskörpers 31.

Der Durchmesser des Drahts der Drahtkörper 34, 35 oder, bei unrundem Querschnitt, die größte Erstreckung des Drahtes im Querschnitt beträgt vorteilhaft von 0,1 mm bis 2 mm, insbesondere von 0,2 mm bis 1 mm, bevorzugt von 0,3 mm bis 1 mm. Besonders bevorzugt beträgt die größte Erstreckung des Drahtes im Querschnitt höchstens 0,5 mm. Ein Drahtdurchmesser in diesen Größenordnungen ist für die Drahtkörper aller Ausführungsbeispiele bevorzugt.

Beide Stirnseiten 36 und 37 werden im Ausführungsbeispiel vollständig von dem zweiten Teilbereich 33 gebildet. Der Durchströmungskörper 31 weist die Umfangsfläche 38 auf. Die Umfangsfläche 38 erstreckt sich von der ersten Stirnseite 36 zur zweiten Stirnseite 37. Die Umfangsfläche 38 steht vorteilhaft mit dem Katalysatorgehäuse 27 in Kontakt. Bevorzugt ist der Durchströmungskörper 31 über die Pressung der Umfangsfläche 38 gegen das Katalysatorgehäuse 27 im Katalysatorgehäuse 27 gehalten. Die Umfangsfläche 38 wird im Ausführungsbeispiel vollständig vom zweiten Teilbereich 33 gebildet. Die Umfangsfläche 38 wird im Ausführungsbeispiel jeweils hälftig von den beiden Drahtkörpern 35 gebildet.

In einem Querschnitt durch den ersten Teilbereich 32 senkrecht zur Strömungsrichtung 40 erstreckt sich der erste Teilbereich 32 vorteilhaft über mindestens 30%, insbesondere mindestens 50% der Fläche des Durchströmungskörpers 31. Vorteilhaft erstreckt sich der erste Teilbereich 32 in mindestens einem Querschnitt durch den ersten Teilbereich 32 senkrecht zur Strömungsrichtung 40 über höchstens 80%, insbesondere höchstens 70% der Fläche des Durchströmungskörpers 31 in diesem Querschnitt.

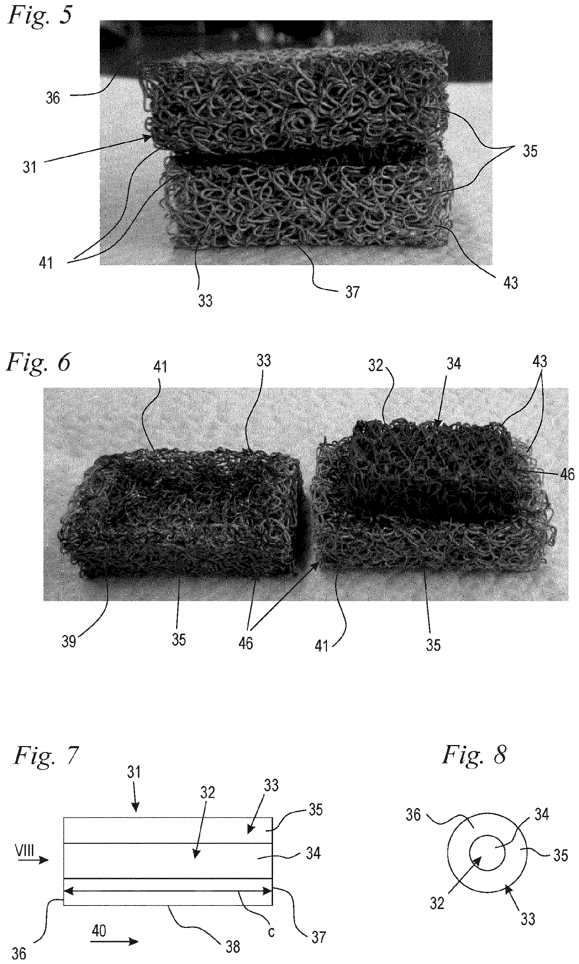

Fig. 5 zeigt den Aufbau des Durchströmungskörpers 31 aus Metalldraht 43 im Einzelnen. Der Metalldraht 43 bildet die beiden zweiten Drahtkörper 35 und, wie Fig. 6 zeigt, den ersten Drahtkörper 34. Die beiden Drahtkörper 35 bilden die beiden Stirnseiten 36 und 37 des Durchströmungskörpers 31, wie in Fig. 5 dargestellt. Die Drahtkörper 35 sind aus in Form gepresstem Metalldraht aufgebaut. In vorteilhafter Gestaltung wird jeder Drahtkörper 35 durch einen einzigen Draht gebildet. Die Drahtkörper 35 können aus in Form gepresstem Metallgestrick bestehen.

Wie Fig. 6 zeigt, weisen beide Drahtkörper 35 jeweils eine Vertiefung 39 auf. Im Ausführungsbeispiel sind die Vertiefungen 39 im Querschnitt etwa rechteckig. Der erste Drahtkörper 34 ragt in dem in Fig. 5 gezeigten zusammengebauten Zustand des Durchströmungskörpers 31 in die Vertiefungen 39 beider Drahtkörper 35. Der Querschnitt der Vertiefungen 39 entspricht etwa dem Querschnitt des ersten Drahtkörpers 34, so dass der Drahtkörper 34 die Vertiefung 39 weitgehend, insbesondere vollständig ausfüllt. In Fig. 6 ist der in Form gepresste Metalldraht 46, aus dem die Drahtkörper 34 und 35 gebildet sind, gut erkennbar. Wie Fig. 6 auch zeigt, erstreckt sich um die Vertiefungen 39 jeweils ein Rand 41 der Drahtkörper 35, der den ersten Drahtkörper 34 an seinem Umfang umgibt. Die Ränder 41 ragen, wie Fig. 5 zeigt, aufeinander zu, so dass der erste Drahtkörper 34 weitgehend, insbesondere vollständig von den beiden den zweiten Teilbereich 33 bildenden zweiten Drahtkörpern 35 umgeben ist.

Die Fig. 7 und 8 zeigen ein weiteres Ausführungsbeispiel eines Durchströmungskörpers 31. Der Durchströmungskörper 31 weist zwei Teilbereiche 32 und 33 auf, die mit bezogen auf das Volumen unterschiedlichen Mengen katalytisch wirkenden Materials beschichtet sind. Beide Teilbereiche 32 und 33 sind Drahtkörper, insbesondere aus in Form gepresstem Metalldraht. Bevorzugt ist jeder Teilbereich 32, 33 durch genau einen Drahtkörper 34 bzw. 35 gebildet. Es kann jedoch auch vorgesehen sein, dass einer oder beide Teilbereiche 32, 33 durch mehrere Drahtkörper 34, 35 gebildet sind. Im Ausführungsbeispiel erstrecken sich beide Teilbereiche 32 und 33 durchgehend von der ersten Stirnseite 36 zur zweiten Stirnseite 37. Beide Teilbereiche 32 und 33 weisen eine in Strömungsrichtung gemessene Länge c auf, die dem Abstand zwischen der ersten Stirnseite 36 und der zweiten Stirnseite 37 entspricht.

In einem Querschnitt durch den ersten Teilbereich 32 senkrecht zur Strömungsrichtung 40 erstreckt sich der erste Teilbereich 32 vorteilhaft über mindestens 30%, insbesondere mindestens 50% der Fläche des Durchströmungskörpers 31. Vorteilhaft erstreckt sich der erste Teilbereich 32 in mindestens einem Querschnitt durch den ersten Teilbereich 32 senkrecht zur Strömungsrichtung 40 über höchstens 80%, insbesondere höchstens 70% der Fläche des Durchströmungskörpers 31 in diesem Querschnitt.

Der zweite Teilbereich 33 bildet die Umfangsfläche 38 des Durchströmungskörpers 31. Die Umfangsfläche 38 wird vollständig von dem zweiten Teilbereich 33 gebildet. Wie auch Fig. 8 zeigt, ist im Ausführungsbeispiel der erste Teilbereich 32 zylindrisch ausgebildet und der zweite Teilbereich 33 als Hohlzylinder. Im Inneren des den zweiten Teilbereich 33 bildenden Hohlzylinders ist der erste Teilbereich 32 angeordnet. Der erste Teilbereich 32 füllt den Innenraum des zweiten Teilbereichs 33 vollständig aus. Der gesamte Abgasstrom teilt sich dadurch in einen durch den ersten Teilbereich 32 und einen durch den zweiten Teilbereich 33 strömenden Teilstrom auf.

Die erste Stirnseite 36 und die zweite Stirnseite 37 sind jeweils sowohl durch den ersten Teilbereich 32 als auch durch den zweiten Teilbereich 33 gebildet. Vorteilhaft sind dabei mindestens 30%, insbesondere mindestens 50% der ersten Stirnseite 36 von dem zweiten Teilbereich 33 gebildet. In alternativer Gestaltung kann auch vorgesehen sein, dass der erste Teilbereich 32 eine in Strömungsrichtung 40 gemessene Länge aufweist, die kleiner als die Länge c des zweiten Teilbereichs 33 ist. In diesem Fall können die erste Stirnseite 36 und/oder die zweite Stirnseite 37 vollständig von dem zweiten Teilbereich 33 gebildet sein.

Der Durchströmungskörper 31 kann dadurch hergestellt sein, dass der zylindrische erste Teilbereich 32 in den hohlzylindrischen zweiten Teilbereich 33 eingepresst wird. Alternativ kann auch vorgesehen sein, dass der fertig hergestellte und beschichtete erste Teilbereich 32 von einem unbeschichteten oder nur mit einem Washcoat beschichteten Drahtkörper umgeben wird, der den zweiten Teilbereich 33 bildet. Der den zweiten Teilbereich 33 bildende Drahtkörper kann beispielsweise um den ersten Teilbereich 32 gewickelt werden. Dabei kann der zweite Teilbereich 33 mit größeren Abmessungen ausgebildet sein, so dass der zweite Teilbereich 33 über den ersten Teilbereich 32 hinausragt und so die erste und/oder die zweite Stirnseite 36, 37 bilden kann.

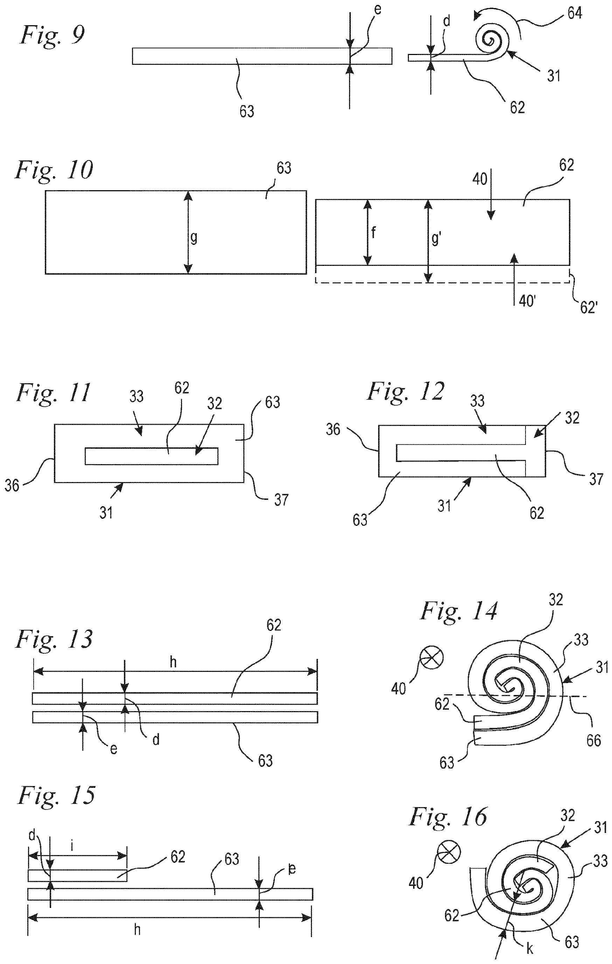

In vorteilhafter alternativer Gestaltung kann der Durchströmungskörper 31 aufgewickelt sein. Dies ist schematisch in den Figuren 9 und 10 dargestellt. Die Gestaltung des Durchströmungskörpers 31 als Wickelkörper ist insbesondere für einen Durchströmungskörper 31 mit etwa zylindrischer Form, beispielsweise für den in den Figuren 7 und 8 dargestellten Durchströmungskörper 31 vorteilhaft.

Der Durchströmungskörper 31 kann durch mindestens eine Matte 62, 63 gebildet sein, die aufgewickelt wird. Der durch Aufwickeln hergestellte Durchströmungskörper 31 wird vorteilhaft nach dem Aufwickeln in Form gepresst. Fig. 9 zeigt schematisch die Herstellung eines Durchströmungskörpers 31 aus einer ersten Matte 62 und einer zweiten Matte 63. Die erste Matte 62 bildet den ersten Teilbereich 32 des Durchströmungskörpers 31, und die zweite Matte 63 bildet den zweiten Teilbereich 33 des Durchströmungskörpers 31. Es können auch mehrere erste Matten 62 und/oder mehrere zweite Matten 63 vorgesehen sein. Die zweite Matte 63 umgibt die erste Matte 62 nach dem Aufwickeln vorteilhaft über deren gesamten Außenumfang. Die gesamte Umfangsfläche des Durchströmungskörpers 31 wird demnach vorteilhaft durch die zweite Matte 63, also durch den zweiten Teilbereich 33 gebildet.

Die Matten 62 und 63 können die gleiche Dicke aufweisen. Im Ausführungsbeispiel weist die Matte 62 eine Dicke d auf. Die Matte 63 weist eine Dicke e auf. Im Ausführungsbeispiel sind die Dicken d und e unterschiedlich. Die Dicke d ist im Ausführungsbeispiel kleiner als die Dicke e. Es kann auch vorgesehen sein, dass die Dicke d größer als die Dicke e ist.

Die mindestens eine erste Matte 62 weist eine katalytisch wirkende Beschichtung auf. Zusätzlich kann die mindestens eine erste Matte 62 unter der katalytisch wirkenden Beschichtung einen Washcoat aufweisen. Die mindestens eine zweite Matte 63 weist keine katalytisch wirkende Beschichtung oder eine geringere Menge katalytisch wirkender Beschichtung bezogen auf das Volumen auf als die mindestens eine erste Matte 62. Bevorzugt beträgt die katalytisch wirkende Beschichtung der zweiten Matte 63 weniger als 1 mg/cm³. Die mindestens eine zweite Matte 63 kann einen Washcoat oder keine Beschichtung zur Vergrößerung der Oberfläche aufweisen.

In Fig. 10 sind eine erste Matte 62 und eine zweite Matte 63 in nicht aufgewickeltem Zustand dargestellt. Die erste Matte 62 weist eine Breite f und die zweite Matte 63 eine Breite g auf. Im Ausführungsbeispiel ist die Breite g größer als die Breite f. Die Breiten f und g sind parallel zur Wickelachse der Matten 62 und 63 gemessen. Bei fertig gewickeltem Durchströmungskörper 31 sind die Breiten f und g in Strömungsrichtung 40 gemessen. Die Strömungsrichtung 40 ist in Fig. 10 schematisch eingezeichnet. In alternativer Ausführungsvariante kann auch eine Strömungsrichtung in entgegengesetzter Richtung vorgesehen sein, wie in Fig. 10 schematisch durch den Pfeil 40' angedeutet. Im Ausführungsbeispiel ist die Breite f der mindestens ersten Matte 62 kleiner als die Breite g der mindestens einen zweiten Matte 63. Dadurch überlappt die mindestens eine zweite Matte 63 die mindestens eine erste Matte 62 an mindestens einer Stirnseite 36, 37 des Durchströmungskörpers 31. Dadurch kann die mindestens eine zweite Matte 63 mindestens eine Stirnseite 36 und/oder 37 des Durchströmungskörpers 31 bilden, wie schematisch in Fig. 11 dargestellt ist.

Es kann auch vorgesehen sein, dass die Breiten g und f gleich groß sind und die Matten 62 und 63 mit Versatz in Strömungsrichtung 40, also parallel zu den Breiten f und g aufgewickelt werden. Die Anordnung einer solchen Matte 62' ist in Fig. 10 mit gestrichelter Linie dargestellt. Die Matte 62' weist eine Breite g' auf, die der Breite der Matte 63 entspricht. Der sich ergebende Durchströmungskörper 31 ist schematisch in Fig. 12 dargestellt. Bei der dargestellten Ausführungsvariante in Fig. 12 bildet der zweite Teilbereich 33 die erste Stirnseite 36 und der erste Teilbereich 32 bildet die zweite Stirnseite 37. In alternativer Ausführungsvariante kann der in Fig. 12 dargestellte Durchströmungskörper 31 auch spiegelsymmetrisch zu der Darstellung in Fig. 12 eingebaut werden. Die erste Stirnseite 36 und die zweite Stirnseite 37 sind bei dieser Ausführungsvariante gegenüber der Darstellung in Fig. 12 vertauscht. Der erste Teilbereich 32 bildet dann die erste Stirnseite 36 und der zweite Teilbereich 33 bildet die zweite Stirnseite 37.

Alternativ kann auch vorgesehen sein, dass beide Matten 62 und 63 die gleiche Breiten g und f aufweisen und ohne Versatz aufgewickelt sind, so dass bei fertig hergestelltem Durchströmungskörper 31 beide Teilbereiche 32 und 33, also beide Matten 62 und 63 an beide Stirnseiten 36 und 37 ragen, wie beim Durchströmungskörper 31 in Fig. 7 dargestellt.

In vorteilhafter Gestaltung sind der erste Teilbereich 32 und der zweite Teilbereich 33 kompakte Bereiche. Die kleinste den ersten Teilbereich 32 vollständig umhüllende Fläche schließt vorteilhaft keine Abschnitte des zweiten Teilbereichs 33 mit ein. Alternativ kann vorgesehen sein, dass die Teilbereiche in einem oder mehreren Querschnitten abwechselnd angeordnet sind, wobei in mindestens einem Querschnitt jeder Teilbereich mindestens zwei Mal geschnitten wird. Derartige Ausführungsbeispiele sind in den Figuren 13 bis 16 und Fig. 23 gezeigt.

Im Ausführungsbeispiel nach Fig. 13 und Fig. 14 sind zwei Matten 62 und 63 vorgesehen, die aufeinandergelegt und anschließend gemeinsam aufgewickelt werden. Wie Fig. 14 zeigt, ergeben sich dadurch ein erster Teilbereich 32 und ein zweiter Teilbereich 33, die in Richtung senkrecht zur Strömungsrichtung 40 aufeinanderfolgende Schichten bilden. Der erste Teilbereich 32 ist dabei durch die erste Matte 62 gebildet und der zweite Teilbereich 33 durch die zweite Matte 63. Die Dicke jeder Schicht entspricht der Dicke d bzw. e der jeweiligen Matte 62 bzw. 63. Die Dicken d, e der Matten 62 und 63 sind in Fig. 13 eingezeichnet. Die Matten 62 und 63 können dabei in allen Ausführungsbeispielen die gleiche Dicke d, e aufweisen, wie auch in Fig. 13 dargestellt. Die Dicken d und e können jedoch auch unterschiedlich sein. Die Strömungsrichtung 40 ist in Fig. 14 senkrecht zur Blattebene gerichtet.

Beim Ausführungsbeispiel nach Fig. 13 und 14 weisen beide Matten 62 und 63 die gleiche Länge h auf. Die Matten 62 und 63 können wie zu Fig. 10 beschrieben die gleiche Breite f, g oder unterschiedliche Breiten f und g aufweisen und/oder mit Versatz in Strömungsrichtung 40 zueinander aufgewickelt werden.

Die gestrichelte Linie 66 in Fig. 14 gibt die Lage eines möglichen Querschnitts durch den Durchströmungskörper 31 an. In diesem Querschnitt liegen drei Abschnitte des zweiten Teilbereichs 33 und zwei Abschnitte des ersten Teilbereichs 32. Die Abschnitte der Teilbereiche 32 und 33 wechseln sich in diesem Querschnitt ab. Die Teilbereiche 32 und 33 sind nicht kompakt ausgebildet, sondern in diesem Querschnitt durch aufeinanderfolgende Schichten gebildet.

Die Figuren 15 und 16 zeigen ein Ausführungsbeispiel mit einer ersten Matte 62, die eine Länge i aufweist und mit einer zweiten Matte 63 mit einer Länge h. Die Länge i ist dabei kleiner als die Länge h. Die Längen h und i sind vorteilhaft so aufeinander abgestimmt, dass zumindest über einen Teilbereich des Umfangs des Durchströmungskörpers 31 mindestens zwei Lagen der zweiten Matte 63 aufeinanderliegen. Dadurch kann am Außenumfang des Durchströmungskörpers 31 auf einfache Weise eine größere senkrecht zur Strömungsrichtung 40 gemessene Dicke k einer Schicht des zweiten Teilbereichs 33 hergestellt werden. Eine Schicht des zweiten Teilbereichs 33 kann auf einfache Weise durch mehrere Lagen der zweiten Matte 63 gebildet werden.

Die erste Matte 62 weist eine Dicke d auf und die zweite Matte 63 weist eine Dicke e auf. Die Dicken d und e können gleich groß sein. In vorteilhafter alternativer Ausführungsvariante sind die Dicken d und e unterschiedlich groß.

Auch beim Ausführungsbeispiel nach den Figuren 15 und 16 können die Matten 62 und 63 unterschiedliche Breiten f, g aufweisen und/oder in Strömungsrichtung 40 mit Versatz zueinander angeordnet sein.

Die Darstellungen in den Figuren 14 und 16 sind dabei nur schematisch. Tatsächlich kann eine deutlich größere Anzahl von Lagen der Matten 62 und 63 vorgesehen sein.

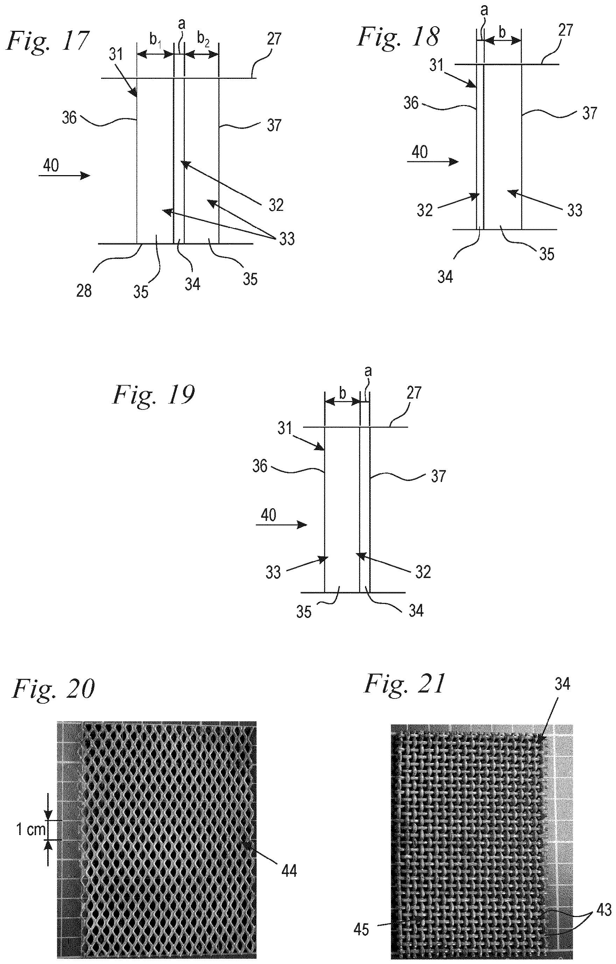

Fig. 17 zeigt ein weiteres bevorzugtes Ausführungsbeispiel eines Durchströmungskörpers 31, der durch einen ersten Drahtkörper 34 und zwei zweite Drahtkörper 35 gebildet ist. Beide Drahtkörper 34, 35 weisen den gleichen Querschnitt auf. Beide Drahtkörper 34, 35 erstrecken sich in jedem Querschnitt senkrecht zur Strömungsrichtung 40 über den gesamten Querschnitt des Durchströmungskörpers 31. Die Umfangsfläche 38 wird sowohl von den beiden zweiten Drahtkörpern 35 als auch vom ersten Drahtkörper 34 gebildet. Die Umfangsfläche 38 ist vorteilhaft zu mindestens 50%, insbesondere zu mindestens 80%, von den zweiten Drahtkörpern 35 gebildet. Die erste Stirnseite 36 wird vollständig von einem zweiten Drahtkörper 35 gebildet. In Strömungsrichtung 40 besitzt dieser Drahtkörper 35 eine Dicke b₁. In Strömungsrichtung folgt auf diesen zweiten Drahtkörper 35 ein erster Drahtkörper 34 mit einer in Strömungsrichtung 40 gemessenen Dicke a. Auf den ersten Drahtkörper 34 folgt in Strömungsrichtung 40 ein weiterer Drahtkörper 35 mit einer in Strömungsrichtung 40 gemessenen Dicke b₂. Die Dicke a des ersten Drahtkörpers 34 ist vorzugsweise deutlich kleiner als die Dicken b₁ und b₂. Die Dicke a des ersten Drahtkörpers 34 beträgt vorteilhaft höchstens 30%, insbesondere höchstens 20%, bevorzugt höchstens 10% der Summe der Dicken b₁ und b₂ des zweiten Teilbereichs 33.

Fig. 18 zeigt ein weiteres bevorzugtes Ausführungsbeispiel eines Durchströmungskörpers 31, der aus einem einzigen ersten Drahtkörper 34 und einem einzigen zweiten Drahtkörper 35 gebildet ist. Der erste Drahtkörper 34 ist stromauf angeordnet und bildet die erste Stirnseite 34 vollständig. Der zweite Drahtkörper 35 ist stromab angeordnet und bildet die zweite Stirnseite 37 vollständig. Die Drahtkörper 34 und 35 erstrecken sich jeweils über den gesamten senkrecht zur Strömungsrichtung 40 betrachteten Querschnitt des Durchströmungskörpers 31. Die größte Dicke a ist deutlich kleiner als die größte Dicke b. Die größte Dicke a beträgt vorteilhaft höchstens 30%, insbesondere höchstens 20%, bevorzugt höchstens 10% der größten Dicke b des zweiten Teilbereichs 33.

Beide Drahtkörper 34 und 35 weisen jeweils eine konstante Dicke a, b auf. Beide Drahtkörper 34 und 35 bilden jeweils einen Teil der Umfangsfläche 38. Vorteilhaft werden mindestens 50%, insbesondere mindestens 80% der Umfangsfläche 38 von dem zweiten Durchströmungskörper 35 gebildet.

Fig. 19 zeigt eine Ausführungsvariante eines Durchströmungskörpers 31, dessen Aufbau dem in Fig. 18 dargestellten Durchströmungskörper 31 entspricht. Allerdings ist der Durchströmungskörper 31 in Fig. 19 so im Abgasschalldämpfer 23 angeordnet, dass der zweite Drahtkörper 35 bezogen auf die Strömungsrichtung 40 stromauf des ersten Drahtkörpers 34 angeordnet ist. Der zweite Drahtkörper 35 bildet die erste Stirnseite 36 vollständig. Der erste Drahtkörper 34 bildet die zweite Stirnseite 37 vollständig.

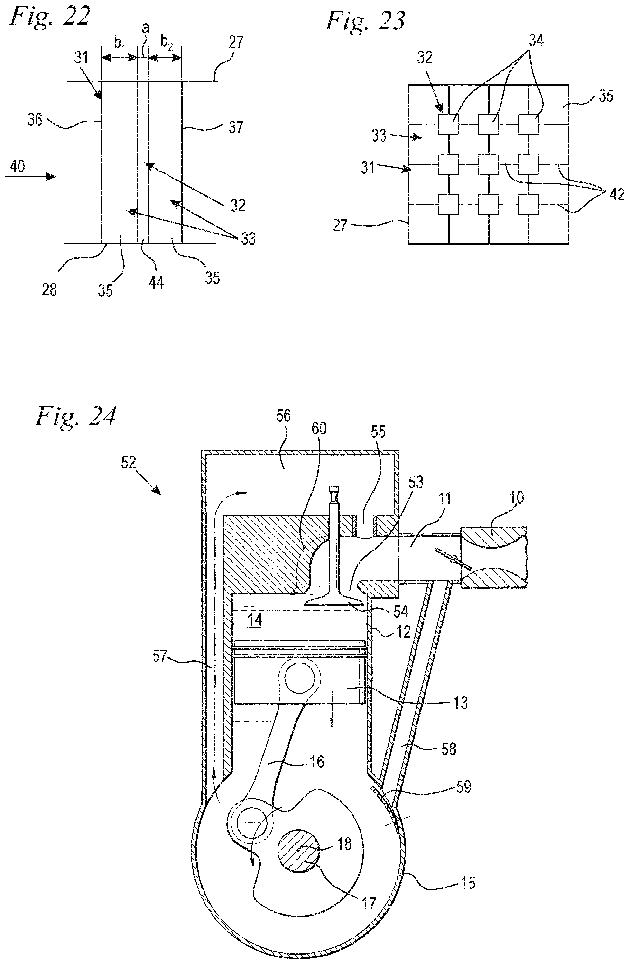

Fig. 21 zeigt ein mögliches Ausführungsbeispiel eines ersten Einzelkörpers, der katalytisch wirkende Beschichtung aufweist. Fig. 20 zeigt eine nicht erfindungsgemäße Ausführung eines ersten Einzelkörpers, der katalytisch wirkende Beschichtung aufweist. In Fig. 20 ist als formstabiler Einzelkörper ein Metallgitter 44 gezeigt, das beispielsweise anstatt eines ersten Drahtkörpers 34 in einem der in Fig. 17, 18 oder 19 dargestellten Durchströmungskörper 31 vorgesehen sein kann. Die Verwendung eines Metallgitters 44 anstatt eines ersten Drahtkörpers 34 ist in Fig. 22 exemplarisch für den in Fig. 17 gezeigten Durchströmungskörper 31 gezeigt. In den Fig. 18 und 19 kann der erste Drahtkörper 34 in entsprechender Weise durch ein Metallgitter 44 ersetzt werden.

Fig. 21 zeigt einen ersten Drahtkörper 34, der als Metallgewebe 45 ausgebildet ist. Das Metallgewebe 45 ist aus einzelnen Metalldrähten 43 hergestellt, die die Kettfäden und Schussfäden bilden. In den Figuren 20 und 21 ist jeweils auch ein möglicher Maßstab angegeben.

Fig. 23 zeigt ein weiteres Ausführungsbeispiel für einen Durchströmungskörper 31. Der Durchströmungskörper 31 ist durch eine Vielzahl von ersten Drahtkörpern 34 gebildet, die den ersten Teilbereich 32 bilden und mit katalytisch wirkender Beschichtung versehen sind. Die ersten Drahtkörper 34 sind durch Bereiche des zweiten Teilbereichs 33 voneinander getrennt. Die Bereiche des zweiten Teilbereichs 33 können separat voneinander ausgebildet und durch mehrere zweite Drahtkörper 35 gebildet sein. Alternativ können die Bereiche des zweiten Teilbereichs 33 durch einen einzigen zweiten Drahtkörper 35 gebildet sein, der entsprechende Aussparungen aufweist. Die einzelnen ersten Drahtkörper 34 sind miteinander und/oder mit dem zweiten Teilbereich 33 über Wärmeleitelemente 42 verbunden. Die Wärmeleitelemente 42 weisen eine höhere Wärmeleitfähigkeit auf als die ersten Drahtkörper 34. Die Wärmeleitelemente 42 können beispielsweise aus einem Material bestehen, das eine höhere Wärmeleitfähigkeit hat als das Material der ersten Drahtkörper 34. Alternativ können die Wärmeleitelemente 42 beispielsweise einen größeren Querschnitt aufweisen als der Draht der ersten Drahtkörper 34. Die Wärmeleitelemente 42 stellen vorteilhaft eine direkte und gerade Verbindung zwischen benachbarten ersten Drahtkörpern 34 her. Über die Wärmeleitelemente 42 wird in dem ersten Drahtkörper 34 entstehende Hitze an den oder die zweiten Drahtkörper 35 abgegeben. Dadurch wird eine schnellere Erwärmung des zweiten Teilbereichs 33 erreicht.

Der Durchströmungskörper 31 ist im Katalysatorgehäuse 27 angeordnet. Vorteilhaft sind die ersten Drahtkörper 34 über Wärmeleitelemente 42 mit dem Gehäuse 27 verbunden. Dadurch kann die entstehende Wärme von den ersten Drahtkörpern 34 zumindest teilweise ins Katalysatorgehäuse 27 abgeleitet werden, und eine übermäßige Erhitzung der ersten Drahtkörper 34 ist vermieden.

In Fig. 1 ist vorgesehen, dass der Abgasschalldämpfer 23 an einem Zweitaktmotor 8 angeordnet ist. Alternativ kann der Abgasschalldämpfer 23 auch an einem Viertaktmotor, insbesondere an einem gemischgeschmierten Viertaktmotor angeordnet werden. Ein solcher gemischgeschmierter Viertaktmotor 52 ist in Fig. 24 schematisch dargestellt.

Gleiche Bezugszeichen kennzeichnen dabei gleiche Elemente wie beim Zweitaktmotor 8.

Der Viertaktmotor 52 weist den Brennraum 14 auf, der im Zylinder 12 ausgebildet und vom Kolben 13 begrenzt ist. Im Kurbelgehäuse 15 ist die vom Kolben 13 um die Drehachse 18 rotierend angetriebene Kurbelwelle 17 angeordnet. Der Ansaugkanal 11 mündet an einer steuerbaren Einlassöffnung 53 in den Brennraum 14. An der Einlassöffnung 53 ist ein Einlassventil 54 angeordnet, das beispielsweise über einen Steuernocken oder über einen Kipphebel, insbesondere in Abhängigkeit der Drehlage der Kurbelwelle 17, angesteuert sein kann. Aus dem Brennraum 14 führt ein schematisch dargestellter Auslasskanal 60, der ebenfalls von einem nicht dargestellten Ventil gesteuert ist. Der Auslasskanal 60 mündet am Abgaseinlass 24 des Abgasschalldämpfers 23 (Fig. 1). Der Ansaugkanal 11 ist über eine Verbindungsöffnung 55 mit einem Ventilansteuerungsraum 56 verbunden. Der Ventilansteuerungsraum 56 ist über einen ersten Verbindungskanal 57 mit dem Innenraum des Kurbelgehäuses 15 verbunden. im Ausführungsbeispiel ist ein weiterer, zweiter Verbindungskanal 58 vorgesehen, der den Ansaugkanal 11 über ein Rückschlagventil 59 mit dem Innenraum des Kurbelgehäuses 15 verbindet. Aufgrund der im Betrieb entstehenden Pulsationen im Innenraum des Kurbelgehäuses 15 wird über die Verbindungskanäle 57 und 58 Kraftstoff/Luft-Gemisch aus dem Ansaugkanal 11 in den Innenraum des Kurbelgehäuses 15 transportiert und schmiert dort die beweglichen Teile. Dadurch muss im Kraftstoff Öl enthalten sein, das teilweise unverbrannt durch den Auslasskanal 60 in den Abgasschalldämpfer 23 gelangen kann.

In allen Ausführungsvarianten kann der zweite Teilbereich 33 keine Beschichtung, einen Washcoat oder Washcoat und katalytisch wirkende Beschichtung aufweisen. Die Menge katalytisch wirkender Beschichtung des zweiten Teilbereichs 33 kann demnach gleich null oder größer als null sein. Die Menge katalytisch wirkender Beschichtung des zweiten Teilbereichs 33 ist bezogen auf das Volumen kleiner als die Menge katalytisch wirkender Beschichtung des ersten Teilbereichs 32.

In allen Ausführungsbeispielen beträgt das Volumen des ersten Teilbereichs 32 vorteilhaft 5% bis 90%, insbesondere 5% bis 80%, bevorzugt von 10% bis 20% des Gesamtvolumens des Durchströmungskörpers 31. Besonders vorteilhaft beträgt das Volumen des ersten Teilbereichs 32 höchstens 50%, insbesondere höchstens 30% des Gesamtvolumens des Durchströmungskörpers 31. Das Volumen des zweiten Teilbereichs 33 beträgt vorteilhaft 10% bis 95%, insbesondere 20% bis 95%, bevorzugt 80% bis 90% des Gesamtvolumens des Durchströmungskörpers 31. Besonders vorteilhaft beträgt das Volumen des zweiten Teilbereichs 32 mindestens 50%, insbesondere mindestens 70% des Gesamtvolumens des Durchströmungskörpers 31.

Das Katalysatorgehäuse 27 kann für alle Ausführungsbeispiele entsprechend ausgebildet werden wie zum ersten Ausführungsbeispiel beschrieben. Auch eine andere Gestaltung des Katalysatorgehäuses 27 kann vorteilhaft sein. Bei allen Ausführungsvarianten können ein oder mehrere Drahtkörper durch Metallgewebe oder in Form gepressten Metalldraht gebildet sein. In allen Ausführungsbeispielen können ein oder mehrere Einzelkörper durch ein Metallgitter oder einen Metallkörper mit anderer Struktur gebildet sein. Es kann vorgesehen sein, dass der Durchströmungskörper 31 ausschließlich aus Drahtkörpern aufgebaut ist. Alternativ kann auch vorgesehen sein, dass der Durchströmungskörper 31 neben den zwei erfindungsgemäßen Drahtkörpern weitere, nicht aus Draht gebildete Einzelkörper, insbesondere aus Metall, aufweist. Vorzugsweise ist der Durchströmungskörper 31 aus einer geringen Anzahl einzelner, formstabiler Einzelkörper aufgebaut. Die formstabilen Einzelkörper sind vorteilhaft miteinander verpresst und bilden so einen formstabilen Durchströmungskörper 31. Vorteilhaft ist der Durchströmungskörper 31 durch höchstens zehn, insbesondere höchstens fünf Einzelkörper gebildet. Besonders bevorzugt weist der Durchströmungskörper 31 zwei bis vier Einzelkörper auf. Vorzugsweise bildet jeder Einzelkörper lediglich einen Teil eines einzigen Teilbereichs des Durchströmungskörpers 31. Jeder Einzelkörper des Durchströmungskörpers 31 weist demnach eine im Rahmen der Fertigungsgenauigkeit einheitliche katalytisch wirkende Beschichtung auf. Die Schichtdicke der katalytisch wirksamen Beschichtung ist im Rahmen der Fertigungsgenauigkeit einheitlich. Jeder Einzelkörper, insbesondere jeder Drahtkörper des Durchströmungskörpers 31 wird demnach einheitlich gefertigt. Jeder Einzelkörper des Durchströmungskörpers 31 wird einheitlich beschichtet oder nicht beschichtet. Dadurch ergibt sich eine einfache Herstellung. In besonders vorteilhafter Gestaltung ist der Durchströmungskörper 31 durch eine geringe Anzahl von formstabilen Drahtkörpern gebildet.

In den Ausführungsbeispielen weist der Katalysator eine annähernd rechteckige Form oder eine zylindrische Form auf. Auch eine andere Form des Katalysators kann jedoch vorteilhaft sein. Insbesondere wird ein kugelförmiger Katalysator als vorteilhaft angesehen.

## Patentansprüche

1. Abgasschalldämpfer mit einem Abgaseinlass (24), einem Abgasauslass (25) und einem in Strömungsrichtung (40) zwischen dem Abgaseinlass (24) und dem Abgasauslass (25) angeordneten Katalysator (26), wobei der Katalysator (26) mindestens einen Durchströmungskörper (31) aufweist, der mindestens einen Drahtkörper (34, 35) umfasst, wobei der Durchströmungskörper (31) eine erste, bezogen auf die Strömungsrichtung (40) durch den Durchströmungskörper (31) stromauf angeordnete Stirnseite (36) und eine zweite, bezogen auf die Strömungsrichtung (40) durch den Durchströmungskörper (31) stromab angeordnete Stirnseite (37) aufweist, wobei zumindest ein erster Teilbereich (32) des Durchströmungskörpers (31) mit katalytisch wirkender Beschichtung beschichtet ist, wobei der Durchströmungskörper (31) einen zweiten Teilbereich (33) aufweist, der eine geringere Menge katalytisch wirkender Beschichtung bezogen auf das Volumen aufweist als der erste Teilbereich (32), wobei die Menge katalytisch wirkender Beschichtung des zweiten Teilbereichs (33) gleich null oder größer als null sein kann,
**dadurch gekennzeichnet, dass** der erste Teilbereich (32) durch mindestens einen ersten Drahtkörper (34) und der zweite Teilbereich (33) durch mindestens einen zweiten Drahtkörper (35) gebildet ist.

2. Abgasschalldämpfer nach Anspruch 1,
**dadurch gekennzeichnet, dass** der zweite Teilbereich (33) keine katalytisch wirkende Beschichtung aufweist.

3. Abgasschalldämpfer nach Anspruch 1 oder 2,
**dadurch gekennzeichnet, dass** der Durchströmungskörper (31) aus mehreren formstabilen Einzelkörpern zusammengesetzt ist, wobei jeder Einzelkörper des Durchströmungskörpers (31) für sich gesehen in allen Bereichen
- die gleiche Beschichtung aufweist, wenn der Einzelkörper kein Teil des zweiten Teilbereichs (33) ist und
- die gleiche Beschichtung oder keine Beschichtung aufweist, wenn der Einzelkörper Teil des zweiten Teilbereichs (33) ist.

4. Abgasschalldämpfer nach einem der Ansprüche 1 bis 3,
**dadurch gekennzeichnet, dass** mindestens 50% der zweiten Stirnseite (37) von dem zweiten Teilbereich (33) gebildet ist, wobei die zweite Stirnseite (37) insbesondere vollständig von dem zweiten Teilbereich (33) gebildet ist.

5. Abgasschalldämpfer nach einem der Ansprüche 1 bis 4,
**dadurch gekennzeichnet, dass** der erste Teilbereich (32) sich in einem Querschnitt durch den ersten Teilbereich (32) senkrecht zur Strömungsrichtung (40) über mindestens 30%, insbesondere mindestens 50% der Fläche des Durchströmungskörpers (31) erstreckt.

6. Abgasschalldämpfer nach einem der Ansprüche 1 bis 5,
**dadurch gekennzeichnet, dass** der zweite Teilbereich (33) durch genau zwei zweite Drahtkörper (35) gebildet ist.

7. Abgasschalldämpfer nach einem der Ansprüche 1 bis 6,
**dadurch gekennzeichnet, dass** der zweite Teilbereich (33) durch mindestens zwei zweite Drahtkörper (35) gebildet ist und dass mindestens einer der zweiten Drahtkörper (35) eine Vertiefung (39) zur Aufnahme mindestens eines ersten Drahtkörpers (34) aufweist.

8. Abgasschalldämpfer nach einem der Ansprüche 1 bis 7,
**dadurch gekennzeichnet, dass** der Durchströmungskörper (31) eine sich von der ersten Stirnseite (36) zur zweiten Stirnseite (37) erstreckende Umfangsfläche (38) aufweist, die zu mindestens 50%, insbesondere vollständig von dem zweiten Teilbereich (33) gebildet ist.

9. Abgasschalldämpfer nach einem der Ansprüche 1 bis 8,
**dadurch gekennzeichnet, dass** der zweite Teilbereich (33) den ersten Teilbereich (32) vollständig umgibt.

10. Abgasschalldämpfer nach einem der Ansprüche 1 bis 8,
**dadurch gekennzeichnet, dass** der erste Teilbereich (32) und der zweite Teilbereich (33) sich jeweils in mindestens einem Querschnitt über die gesamte senkrecht zur Strömungsrichtung gemessene Querschnittsfläche des Abgasschalldämpfers (23) erstrecken, und dass insbesondere jeder Teilbereich (32, 33) eine konstante in Strömungsrichtung (40) gemessene Dicke (a, b, bi, b₂) aufweist.

11. Abgasschalldämpfer nach einem der Ansprüche 1 bis 8 oder 10,
**dadurch gekennzeichnet, dass** mindestens 50% der ersten Stirnseite (36) von dem zweiten Teilbereich (33) gebildet ist, wobei die erste Stirnseite (36) insbesondere vollständig von dem zweiten Teilbereich (33) gebildet ist.

12. Abgasschalldämpfer nach einem der Ansprüche 1 bis 8 oder 10,
**dadurch gekennzeichnet, dass** die erste Stirnseite (36) vollständig von dem ersten Teilbereich (32) gebildet ist.

13. Abgasschalldämpfer nach einem der Ansprüche 1 bis 10,
**dadurch gekennzeichnet, dass** der zweite Teilbereich (33) die zweite Stirnseite (37) bildet.

14. Abgasschalldämpfer nach einem der Ansprüche 1 bis 13,
**dadurch gekennzeichnet, dass** die in Strömungsrichtung (40) gemessene größte Dicke (a) des ersten Teilbereichs (32) höchstens 30%, insbesondere höchstens 10% der in Strömungsrichtung (40) gemessenen größten Dicke (b, bi, b₂) des zweiten Teilbereichs (33) beträgt.

15. Abgasschalldämpfer nach einem der Ansprüche 1 bis 14,
**dadurch gekennzeichnet, dass** mindestens ein Drahtkörper (34, 35) aus in Form gepresstem Metalldraht (46), insbesondere aus in Form gepresstem Metallgestrick gebildet ist.

16. Abgasschalldämpfer nach einem der Ansprüche 1 bis 15,
**dadurch gekennzeichnet, dass** der Durchströmungskörper (31) durch mindestens zwei Drahtkörper (34, 35) mit unterschiedlicher Struktur ausgebildet ist.

17. Abgasschalldämpfer nach einem der Ansprüche 1 bis 16,
**dadurch gekennzeichnet, dass** der Durchströmungskörper (31) mindestens ein Metallgitter (44) umfasst, wobei das Metallgitter (44) insbesondere den ersten Teilbereich (32) bildet.

18. Abgasschalldämpfer nach einem der Ansprüche 1 bis 17,
**dadurch gekennzeichnet, dass** der erste Teilbereich (32) mehrere voneinander getrennt ausgebildete Abschnitte umfasst, zwischen denen sich der zweite Teilbereich (33) erstreckt, wobei die ersten Teilbereiche (32) insbesondere über mindestens ein Wärmeleitelement (42) miteinander verbunden sind.

19. Abgasschalldämpfer nach einem der Ansprüche 1 bis 18,
**dadurch gekennzeichnet, dass** der zweite Teilbereich (33) eine katalytisch wirkende Beschichtung von weniger als 1 mg/cm³ aufweist.

20. Abgasschalldämpfer nach einem der Ansprüche 1 bis 19,
**dadurch gekennzeichnet, dass** der zweite Teilbereich (33) mit einem Washcoat beschichtet ist oder dass der zweite Teilbereich (33) unbeschichtet ist.

21. Abgasschalldämpfer nach einem der Ansprüche 1 bis 20,
**dadurch gekennzeichnet, dass** der Durchströmungskörper (31) durch mindestens eine aufgewickelte Matte (62, 63) gebildet ist, und dass vorteilhaft der erste Teilbereich (32) in Richtung quer zur Strömungsrichtung (40) durch den Durchströmungskörper (31) mindestens teilweise von dem zweiten Teilbereich (33) umgeben ist.

22. Abgasschalldämpfer nach Anspruch 21,
**dadurch gekennzeichnet, dass** der erste Teilbereich (32) durch mindestens eine erste Matte (62) und der zweite Teilbereich (33) durch mindestens eine zweite Matte (63) gebildet ist.

23. Abgasschalldämpfer nach Anspruch 22,
**dadurch gekennzeichnet, dass** die mindestens eine erste Matte (62) und die mindestens eine zweite Matte (63) unterschiedliche Dicken (d, e) aufweisen.

24. Abgasschalldämpfer nach Anspruch 22 oder 23,
**dadurch gekennzeichnet, dass** die mindestens eine erste Matte (62) und die mindestens eine zweite Matte (63) unterschiedliche in Strömungsrichtung (40) gemessene Breiten (f, g) aufweisen.

25. Abgasschalldämpfer nach einem der Ansprüche 1 bis 24,
**dadurch gekennzeichnet, dass** der Katalysator (26) ein Katalysatorgehäuse (27) aufweist, in dem der Durchströmungskörper (31) angeordnet ist, wobei der Durchströmungskörper (31) insbesondere in das Katalysatorgehäuse (27) eingepresst ist.

26. Zweitaktmotor oder gemischgeschmierter Viertaktmotor mit einem Abgasschalldämpfer nach einem der Ansprüche 1 bis 25.

27. Katalysator für einen Abgasschalldämpfer, insbesondere für einen Abgasschalldämpfer nach einem der Ansprüche 1 bis 25, wobei der Katalysator (26) mindestens einen Durchströmungskörper (31) aufweist, der mindestens einen Drahtkörper (34, 35) umfasst, wobei der Durchströmungskörper (31) eine erste, bezogen auf die Strömungsrichtung (40) durch den Durchströmungskörper (31) stromauf angeordnete Stirnseite (36) und eine zweite, bezogen auf die Strömungsrichtung (40) durch den Durchströmungskörper (31) stromab angeordnete Stirnseite (37) aufweist, wobei zumindest ein erster Teilbereich (32) des Durchströmungskörpers (31) mit katalytisch wirkender Beschichtung beschichtet ist,
wobei der Durchströmungskörper (31) einen zweiten Teilbereich (33) aufweist, der eine geringere Menge katalytisch wirkender Beschichtung bezogen auf das Volumen aufweist als der erste Teilbereich (32), wobei die Menge katalytisch wirkender Beschichtung des zweiten Teilbereichs (33) gleich null oder größer als null sein kann,
**dadurch gekennzeichnet, dass** der erste Teilbereich (32) durch mindestens einen ersten Drahtkörper (34) und der zweite Teilbereich (33) durch mindestens einen zweiten Drahtkörper (35) gebildet ist.

## Claims

1. Exhaust muffler having an exhaust-gas inlet (24), an exhaust-gas outlet (25) and a catalytic converter (26) arranged in a flow direction (40) between the exhaust-gas inlet (24) and the exhaust-gas outlet (25), wherein the catalytic converter (26) has at least one throughflow body (31) which comprises at least one wire body (34, 35), wherein the throughflow body (31) has a first end side (36) arranged upstream in relation to the flow direction (40) through the throughflow body (31) and a second end side (37) arranged downstream in relation to the flow direction (40) through the throughflow body (31), wherein at least one first subregion (32) of the throughflow body (31) is coated with catalytically active coating, wherein the throughflow body (31) has a second subregion (33) which has a lower amount of catalytically active coating in relation to volume than the first subregion (32), wherein the amount of catalytically active coating of the second subregion (33) can be equal to zero or greater than zero,
**characterized in that** the first subregion (32) is formed by at least one first wire body (34) and the second subregion (33) is formed by at least one second wire body (35).

2. Exhaust muffler according to Claim 1,
**characterized in that** the second subregion (33) has no catalytically active coating.

3. Exhaust muffler according to Claim 1 or 2,
**characterized in that** the throughflow body (31) is composed of multiple dimensionally stable individual bodies, wherein each individual body of the throughflow body (31), when viewed individually, in all regions
- has the same coating when the individual body is not part of the second subregion (33) and
- has the same coating or no coating when the individual body is part of the second subregion (33).

4. Exhaust muffler according to one of Claims 1 to 3,
**characterized in that** at least 50% of the second end side (37) is formed by the second subregion (33), wherein the second end side (37) is in particular formed completely by the second subregion (33).

5. Exhaust muffler according to one of Claims 1 to 4,
**characterized in that** the first subregion (32) extends, in a cross section through the first subregion (32), perpendicularly with respect to the flow direction (40) over at least 30%, in particular at least 50%, of the surface of the throughflow body (31).

6. Exhaust muffler according to one of Claims 1 to 5,
**characterized in that** the second subregion (33) is formed by exactly two second wire bodies (35).

7. Exhaust muffler according to one of Claims 1 to 6,
**characterized in that** the second subregion (33) is formed by at least two second wire bodies (35), and **in that** at least one of the second wire bodies (35) has a recess (39) for receiving at least one first wire body (34).

8. Exhaust muffler according to one of Claims 1 to 7,
**characterized in that** the throughflow body (31) has a peripheral surface (38) which extends from the first end side (36) to the second end side (37) and is formed to an extent of at least 50%, in particular completely, by the second subregion (33).

9. Exhaust muffler according to one of Claims 1 to 8,
**characterized in that** the second subregion (33) completely surrounds the first subregion (32).

10. Exhaust muffler according to one of Claims 1 to 8,
**characterized in that** the first subregion (32) and the second subregion (33) extend, in each case in at least one cross section, over the entire cross-sectional area, measured perpendicularly with respect to the flow direction, of the exhaust muffler (23), and **in that** in particular each subregion (32, 33) has a constant thickness (a, b, b₁, b₂) measured in the flow direction (40).

11. Exhaust muffler according to one of Claims 1 to 8 or 10,
**characterized in that** at least 50% of the first end side (36) is formed by the second subregion (33), wherein the first end side (36) is in particular formed completely by the second subregion (33).

12. Exhaust muffler according to one of Claims 1 to 8 or 10,
**characterized in that** the first end side (36) is formed completely by the first subregion (32).

13. Exhaust muffler according to one of Claims 1 to 10,
**characterized in that** the second subregion (33) forms the second end side (37).

14. Exhaust muffler according to one of Claims 1 to 13,
**characterized in that** the greatest thickness (a) of the first subregion (32), measured in the flow direction (40), is at most 30%, in particular at most 10%, of the greatest thickness (b, bi, b₂) of the second subregion (33), measured in the flow direction (40).

15. Exhaust muffler according to one of Claims 1 to 14,
**characterized in that** at least one wire body (34, 35) is formed from compression-moulded metal wire (46), in particular from compression-moulded knitted metal fabric.

16. Exhaust muffler according to one of Claims 1 to 15,
**characterized in that** the throughflow body (31) is formed by at least two wire bodies (34, 35) of different structure.

17. Exhaust muffler according to one of Claims 1 to 16,
**characterized in that** the throughflow body (31) comprises at least one metal lattice (44), wherein the metal lattice (44) in particular forms the first subregion (32).

18. Exhaust muffler according to one of Claims 1 to 17,
**characterized in that** the first subregion (32) comprises multiple portions which are formed separately from one another and between which the second subregion (33) extends, wherein the first subregions (32) are in particular connected to one another by way of at least one heat-conducting element (42).

19. Exhaust muffler according to one of Claims 1 to 18,
**characterized in that** the second subregion (33) has a catalytically active coating of less than 1 mg/cm³.

20. Exhaust muffler according to one of Claims 1 to 19,
**characterized in that** the second subregion (33) is coated with a washcoat, or **in that** the second subregion (33) is uncoated.

21. Exhaust muffler according to one of Claims 1 to 20,
**characterized in that** the throughflow body (31) is formed by at least one wound mat (62, 63), and **in that** advantageously the first subregion (32) is at least partially surrounded by the second subregion (33) in a direction transverse to the flow direction (40) through the throughflow body (31).

22. Exhaust muffler according to Claim 21,
**characterized in that** the first subregion (32) is formed by at least one first mat (62) and the second subregion (33) is formed by at least one second mat (63).

23. Exhaust muffler according to Claim 22,
**characterized in that** the at least one first mat (62) and the at least one second mat (63) have different thicknesses (d, e).

24. Exhaust muffler according to Claim 22 or 23,
**characterized in that** the at least one first mat (62) and the at least one second mat (63) have different widths (f, g) measured in the flow direction (40).

25. Exhaust muffler according to one of Claims 1 to 24,
**characterized in that** the catalytic converter (26) has a catalytic converter housing (27) in which the throughflow body (31) is arranged, wherein the throughflow body (31) is in particular pressed into the catalytic converter housing (27).

26. Two-stroke engine or mixture-lubricated four-stroke engine having an exhaust muffler according to one of Claims 1 to 25.

27. Catalytic converter for an exhaust muffler, in particular for an exhaust muffler according to one of Claims 1 to 25, wherein the catalytic converter (26) has at least one throughflow body (31) which comprises at least one wire body (34, 35), wherein the throughflow body (31) has a first end side (36) arranged upstream in relation to the flow direction (40) through the throughflow body (31) and a second end side (37) arranged downstream in relation to the flow direction (40) through the throughflow body (31), wherein at least one first subregion (32) of the throughflow body (31) is coated with catalytically active coating,
wherein the throughflow body (31) has a second subregion (33) which has a lower amount of catalytically active coating in relation to volume than the first subregion (32), wherein the amount of catalytically active coating of the second subregion (33) can be equal to zero or greater than zero,
**characterized in that** the first subregion (32) is formed by at least one first wire body (34) and the second subregion (33) is formed by at least one second wire body (35).

## Revendications

1. Silencieux d'échappement avec une entrée de gaz d'échappement (24), une sortie de gaz d'échappement (25) et un catalyseur (26) agencé dans la direction d'écoulement (40) entre l'entrée de gaz d'échappement (24) et la sortie de gaz d'échappement (25), le catalyseur (26) présentant au moins un corps d'écoulement (31) qui comprend au moins un corps en fil (34, 35), le corps d'écoulement (31) présentant un premier côté frontal (36) agencé en amont par rapport à la direction d'écoulement (40) à travers le corps d'écoulement (31) et un deuxième côté frontal (37) agencé en aval par rapport à la direction d'écoulement (40) à travers le corps d'écoulement (31), au moins une première zone partielle (32) du corps d'écoulement (31) étant revêtue d'un revêtement à action catalytique, le corps d'écoulement (31) présentant une deuxième zone partielle (33) qui présente une quantité de revêtement à action catalytique inférieure en volume à celle de la première zone partielle (32), la quantité de revêtement à action catalytique de la deuxième zone partielle (33) pouvant être égale ou supérieure à zéro, **caractérisé en ce que** la première zone partielle (32) est formée par au moins un premier corps en fil (34) et la deuxième zone partielle (33) par au moins un deuxième corps en fil (35).

2. Silencieux d'échappement selon la revendication 1, **caractérisé en ce que** la deuxième zone partielle (33) ne présente pas de revêtement à action catalytique.

3. Silencieux d'échappement selon la revendication 1 ou 2, **caractérisé en ce que** le corps d'écoulement (31) est composé de plusieurs corps individuels indéformables, chaque corps individuel du corps d'écoulement (31), vu individuellement dans toutes les zones,
- présentant le même revêtement si le corps individuel ne fait pas partie de la deuxième zone partielle (33) et
- présentant le même revêtement ou aucun revêtement si le corps individuel fait partie de la deuxième zone partielle (33).

4. Silencieux d'échappement selon l'une quelconque des revendications 1 à 3, **caractérisé en ce qu'**au moins 50 % du deuxième côté frontal (37) est formé par la deuxième zone partielle (33), le deuxième côté frontal (37) étant notamment entièrement formé par la deuxième zone partielle (33).

5. Silencieux d'échappement selon l'une quelconque des revendications 1 à 4, **caractérisé en ce que** la première zone partielle (32) s'étend, dans une section transversale à travers la première zone partielle (32) perpendiculairement à la direction d'écoulement (40), sur au moins 30 %, notamment au moins 50 % de la surface du corps d'écoulement (31).

6. Silencieux d'échappement selon l'une quelconque des revendications 1 à 5, **caractérisé en ce que** la deuxième zone partielle (33) est formée par exactement deux deuxièmes corps en fil (35).

7. Silencieux d'échappement selon l'une quelconque des revendications 1 à 6, **caractérisé en ce que** la deuxième zone partielle (33) est formée par au moins deux deuxièmes corps en fil (35) et **en ce qu'**au moins l'un des deuxièmes corps en fil (35) présente une cavité (39) pour recevoir au moins un premier corps en fil (34).

8. Silencieux d'échappement selon l'une quelconque des revendications 1 à 7, **caractérisé en ce que** le corps d'écoulement (31) présente une surface périphérique (38) s'étendant du premier côté frontal (36) au deuxième côté frontal (37), qui est formée à au moins 50 %, notamment entièrement, par la deuxième zone partielle (33).

9. Silencieux d'échappement selon l'une quelconque des revendications 1 à 8, **caractérisé en ce que** la deuxième zone partielle (33) entoure entièrement la première zone partielle (32).

10. Silencieux d'échappement selon l'une quelconque des revendications 1 à 8, **caractérisé en ce que** la première zone partielle (32) et la deuxième zone partielle (33) s'étendent chacune en au moins une section transversale sur toute la surface de section transversale du silencieux d'échappement (23) mesurée perpendiculairement à la direction d'écoulement, et notamment **en ce que** chaque zone partielle (32, 33) présente une épaisseur (a, b, b₁, b₂) constante mesurée dans la direction d'écoulement (40).

11. Silencieux d'échappement selon l'une quelconque des revendications 1 à 8 ou 10, **caractérisé en ce qu'**au moins 50 % du premier côté frontal (36) est formé par la deuxième zone partielle (33), le premier côté frontal (36) étant notamment entièrement formé par la deuxième zone partielle (33).

12. Silencieux d'échappement selon l'une quelconque des revendications 1 à 8 ou 10, **caractérisé en ce que** le premier côté frontal (36) est entièrement formé par la première zone partielle (32).

13. Silencieux d'échappement selon l'une quelconque des revendications 1 à 10, **caractérisé en ce que** la deuxième zone partielle (33) forme le deuxième côté frontal (37).

14. Silencieux d'échappement selon l'une quelconque des revendications 1 à 13, **caractérisé en ce que** la plus grande épaisseur (a) de la première zone partielle (32), mesurée dans la direction d'écoulement (40), représente au plus 30 %, notamment au plus 10 % de la plus grande épaisseur (b, bi, b₂) de la deuxième zone partielle (33), mesurée dans la direction d'écoulement (40).

15. Silencieux d'échappement selon l'une quelconque des revendications 1 à 14, **caractérisé en ce qu'**au moins un corps en fil (34, 35) est formé de fil métallique (46) pressé en forme, notamment de tricot métallique pressé en forme.

16. Silencieux d'échappement selon l'une quelconque des revendications 1 à 15, **caractérisé en ce que** le corps d'écoulement (31) est réalisé par au moins deux corps en fil (34, 35) de structure différente.

17. Silencieux d'échappement selon l'une quelconque des revendications 1 à 16, **caractérisé en ce que** le corps d'écoulement (31) comprend au moins une grille métallique (44), la grille métallique (44) formant notamment la première zone partielle (32).

18. Silencieux d'échappement selon l'une quelconque des revendications 1 à 17, **caractérisé en ce que** la première zone partielle (32) comprend plusieurs sections réalisées séparément les unes des autres entre lesquelles s'étend la deuxième zone partielle (33), les premières zones partielles (32) étant reliées entre elles notamment par au moins un élément conducteur de chaleur (42).

19. Silencieux d'échappement selon l'une quelconque des revendications 1 à 18, **caractérisé en ce que** la deuxième zone partielle (33) présente un revêtement à action catalytique de moins de 1 mg/cm³.

20. Silencieux d'échappement selon l'une quelconque des revendications 1 à 19, **caractérisé en ce que** la deuxième zone partielle (33) est revêtue d'une couche de lavis ou **en ce que** la deuxième zone partielle (33) est non revêtue.

21. Silencieux d'échappement selon l'une quelconque des revendications 1 à 20, **caractérisé en ce que** le corps d'écoulement (31) est formé par au moins un mat enroulé (62, 63), et **en ce qu'**avantageusement, la première zone partielle (32) est au moins partiellement entourée par la deuxième zone partielle (33) dans la direction transversale à la direction d'écoulement (40) à travers le corps d'écoulement (31).

22. Silencieux d'échappement selon la revendication 21, **caractérisé en ce que** la première zone partielle (32) est formée par au moins un premier mat (62) et la deuxième zone partielle (33) par au moins un deuxième mat (63).

23. Silencieux d'échappement selon la revendication 22, **caractérisé en ce que** l'au moins un premier mat (62) et l'au moins un deuxième mat (63) présentent des épaisseurs différentes (d, e).

24. Silencieux d'échappement selon la revendication 22 ou 23, **caractérisé en ce que** l'au moins un premier mat (62) et l'au moins un deuxième mat (63) présentent des largeurs (f, g) différentes mesurées dans la direction d'écoulement (40).

25. Silencieux d'échappement selon l'une quelconque des revendications 1 à 24, **caractérisé en ce que** le catalyseur (26) présente un boîtier de catalyseur (27) dans lequel est agencé le corps d'écoulement (31), le corps d'écoulement (31) étant notamment enfoncé dans le boîtier de catalyseur (27).

26. Moteur à deux temps ou moteur à quatre temps à lubrification mixte avec un silencieux d'échappement selon l'une quelconque des revendications 1 à 25.

27. Catalyseur pour un silencieux d'échappement, notamment pour un silencieux d'échappement selon l'une quelconque des revendications 1 à 25, le catalyseur (26) présentant au moins un corps d'écoulement (31) qui comprend au moins un corps en fil (34, 35), le corps d'écoulement (31) présentant un premier côté frontal (36) agencé en amont par rapport à la direction d'écoulement (40) à travers le corps d'écoulement (31) et un deuxième côté frontal (37) agencé en aval par rapport à la direction d'écoulement (40) à travers le corps d'écoulement (31), au moins une première zone partielle (32) du corps d'écoulement (31) étant revêtue d'un revêtement à action catalytique,
le corps d'écoulement (31) présentant une deuxième zone partielle (33) qui présente une quantité de revêtement à action catalytique inférieure en volume à celle de la première zone partielle (32), la quantité de revêtement à action catalytique de la deuxième zone partielle (33) pouvant être égale ou supérieure à zéro,
**caractérisé en ce que** la première zone partielle (32) est formée par au moins un premier corps en fil (34) et la deuxième zone partielle (33) est formée par au moins un deuxième corps en fil (35).
